# EUROPÄISCHE PATENTSCHRIFT

(11) **EP 2 789 972 B1**
(45) Veröffentlichungstag und Bekanntmachung des Hinweises auf die Patenterteilung: **16.08.2017**
(21) Anmeldenummer: 13163545.0
(22) Anmeldetag: 12.04.2013
(51) Int. Cl.: G01C 15/00, G02B 3/14, G02B 26/08

(54) **Vermessungsgerät mit verformbarem optischem Element**
Measuring device with deformable optical element
Appareil de mesure avec élément optique déformable

(43) Veröffentlichungstag der Anmeldung: 15.10.2014
(73) Patentinhaber: Hexagon Technology Center GmbH, 9435 Heerbrugg (CH)
(72) Erfinder: Hinderling, Jürg, CH-9437 Marbach (CH); Scheja, Jochen, CH-9435 Heerbrugg (CH); Dumoulin, Charles Leopold Elisabeth, CH-9436 Balgach (CH); Iseli, Claudio, CH-9434 Au (CH)
(74) Vertreter: Gyaja, Christoph Benjamin

(56) Entgegenhaltungen:
- US-A1- 2010 295 987
- US-A1- 2012 224 164

## Beschreibung

Die Erfindung betrifft ein Vermessungsgerät nach dem Oberbegriff des Anspruchs 1 und ein Verfahren nach dem Oberbegriff des Anspruchs 9.

Geräte der Vermessungstechnik arbeiten vielfach auf Basis von optischen Messsystemen. Beispiele für gattungsgemäße Vermessungsgeräte sind etwa in US 6,873,407, CN 201892533, US 2011/080477, EP 1 081 459, US 2012/127455, WO 2012/033892, WO 2007/079600, WO 2010/148525, oder anderen gezeigt.

Von diesen Geräten wird allgemein eine optische Strahlung in Richtung eines zu vermessenden Zielobjekts ausgesandt, von welchem eine Entfernung und eine Winkellage - also Polarkoordinaten des Zielobjekts - bestimmt werden, welche meist in Folge weiterverarbeitet werden. Von dem zu vermessenden Zielobjekt wird dabei ein Anteil der emittierten Strahlung zum Gerät zurückgeworfen, dort empfangen und in ein elektrisches Signal zur Distanzbestimmung umgewandelt. Dabei können neben der Vermessung von natürlich vorhandenen Zielen auch spezielle Zielmarker oder Reflektoren am Zielobjekt angebracht werden oder es kann z.B. eine mobile Messlatte als Zielobjekt einsetzt werden.

Die ausgesendete optische Strahlung kann dabei zur elektrooptischen Distanzmessung anhand eines Laufzeit- oder Phasenmessprinzips oder einer Kombination dieser Prinzipien genutzt werden, wie dieses etwa in EP 1 757 956, JP 4 843 128, EP 1 311 873, EP 1 450 128, EP 1 882 959, EP 1 043 602, WO 2006/063739 oder anderen beschrieben ist.

Die ausgesendete optische Strahlung kann auch zur Erkennung und/oder Winkelvermessung eines Zielobjekts genutzt werden. Beispielsweise kann eine Zielmarke etwa in Form eines Retroreflektors oder als eines visuellen Merkmals des Zielobjekts, etwa einer Ecke, Kante, Grenze einer Kontrastfläche, etc. wie beispielsweise in WO 2011/141447 oder EP 1 791 082 beschrieben, ausgebildet sein. Dabei kann vom Vermessungsgerät eine gepulst oder kontinuierlich ausgesendete optische Strahlung zur Unterstützung der Erkennung der Ziele im Sichtfeld ausgesendet werden. Eine derartige Erkennung und/oder Vermessung eines Zielobjekts in Winkelkoordinaten kann mit einem positionssensitiven optischen Empfangselement im Gerät erfolgen, beispielsweise mit einem Flächensensor in CCD- oder CMOS-Technologie, einem PSD auf Basis des lateralen photoelektrischen Effekts oder einer Anordnung von einem oder mehrerer Photorezeptoren, wie etwa Photodioden, BiCells, Quadraturdioden, etc.

Zur Winkelbestimmung sind die Vermessungsgeräte meist mit einem oder mehreren Winkelmessern oder Goniometern ausgestattet, mit welchen das Gerät oder Teile davon zur Anzielung gedreht und dabei eine Winkellage bestimmt werden kann. Die Winkelvermessung des Ziels kann dabei unter Nutzung der Winkelmesserauswertung durch exaktes Anzielen des Zielobjekts mit einer Zielachse des Geräts erfolgen. Es kann aber auch, speziell bei hierzu geeigneten kooperativen Zielen, eine ungenaue Anzielung des Zielobjekts innerhalb eines Sichtfelds einer optoelektronischen Winkelmesseinheit (ATR) des Geräts mit den Winkelmessern erfolgen. Durch eine Bestimmung der Abweichung von einer idealen Anzielung innerhalb des Sichtfelds wird darauf folgend der Winkelmessermesswert um diese Abweichung korrigiert.

Derartiges ist etwa in JP 3 748 112 oder GB 2 353 862 beschrieben. Bei den Vermessungsgeräten können die Bewegungen um die Drehachsen der Winkelmesser manuell und/oder motorisiert erfolgen.

Zur Distanz- und Winkelbestimmung kann dabei jeweils eine separate oder eine gemeinsame, vom Gerät ausgesendete Strahlung genutzt werden.

Es ist dabei bekannt, dass bei Entfernungsmessern eine Umschaltung der Divergenz des ausgesendeten Messstrahls von einem weiten Emissionswinkel für kooperative Reflektorziele hin zu einem kollimierteren Messstrahl für reflektorlose Messungen auf natürlichen Oberflächen von Zielobjekten angewandt werden kann. Beispielsweise kann dieses durch Einschwenken einer Linse in den Strahlengang oder anderer optischer Mittel mit demselben Ergebnis erfolgen. Das Dokument US 2012/0224164 zeigt ein optisches Distanzmessgerät, bei welchem eine Umschaltung der Querschnittsfläche der emittierten Messstrahlung erfolgen kann. In einer der Ausführungsformen wird zur Strahlweitenumschaltung eine Flüssiglinse mit umschaltbarer Brennweite verwendet.

Neben den oben beschriebenen messenden optischen Systemen, kann bei den Vermessungsgeräten auch eine Kameraaufnahme eines visuellen Bildes des Zielobjekts für den Benutzer zur Bedienung oder zur Dokumentation der Messung erfolgen. Mittels elektronischer Bildverarbeitung können dabei Funktionen, wie Kantenerkennung, Zielerkennung, Feature Extraktion, automatische Ausführung von vordefinierten Messprogrammen, Touchscreenbedienung, Remote-Bedienung, Livebildübertragung, Aufzeichnung, etc. ausgeführt werden. Neben diesen elektronischen Mitteln zur Bildaufnahme für den Benutzer kann auch ein klassischer, visueller Durchlichtkanal zur Beobachtung des angepeilten Zielobjekts vorhanden sein.

Auch sind so genannte RIM (Range-Imaging-Module) bekannt, welche eine Erfassung einer Vielzahl von Bildpunkten mit zugehörigen Distanzinformationen, also eine dreidimensionalen Zielobjekterfassung in Form einer Punktwolke durchführen. Ein Beispiel hierzu ist etwa in EP 1 684 084 beschrieben. Die dabei erzielbaren Distanz- und Winkelauflösungen, sowie die erzielbaren Genauigkeiten sind vielfach jedoch nicht hinreichend, speziell für Präzisionsmessungen wie etwa in geodätischen Anwendungen.

In der Geodäsie, als ein häufiges Anwendungsfeld der vorliegenden Erfindung, sind hohe Messgenauigkeiten, sowohl bei der Winkel- als auch bei der Distanzbestimmung gefordert. Beispielsweise kommen im Bereich der Landvermessung Tachymeter oder Totalstationen zum Einsatz, welche Distanzmessgenauigkeiten von einigen Millimetern oder auch unter 1 Millimeter aufweisen. Dabei sind Messbereiche von einigen Kilometer bei Reflektormessungen bzw. einigen hundert Metern bei reflektorlosen Messungen gefordert. Die Genauigkeit der Winkelmessungen liegt meist in einem Bereich unter 2 bis 10 Winkelsekunden, vorzugsweise bei 1 Winkelsekunden, 0.5 Winkelsekunden oder darunter. Diese Anforderungen werden weiters erschwert durch die Tatsache, dass derartige Vermessungsgeräte oft in rauen Umgebungen mit stark wechselnden Umgebungsbedingungen, wie Temperatur, Luftfeuchtigkeit, etc. zum Einsatz gelangen.

Um die geforderten hohen Genauigkeiten zu erreichen, ist eine hohe Präzision in der Geräteproduktion erforderlich, speziell bei der Justage der Komponenten im optischen Pfad.

Ein wichtiges Kriterium stellt dabei die Genauigkeit und Stabilität der Ausrichtung der Ziellinie dar, speziell der Ziellinie des Entfernungsmessers oder der Ziellinie der automatischen Zielrichtungsmessvorrichtung (ATR) gegenüber der Zielachse der Anzieleinheit.

Durch den Einbau von immer mehr Funktionalitäten in das Vermessungsgerät, werden jedoch auch die optischen Pfade im Geräteinneren immer komplexer. Vermessungsgeräte können beispielsweise Strahlengänge für Distanzmessung, sichtbare Pilotstrahle, automatische Zielerkennung, automatische Zielausrichtung, Durchsichtbetrachtung, Übersichtskameras, Zoomfunktionen, Bildaufnahme, Zielbeleuchtung, optische Datenkommunikation, interne Referenzstrecken, etc. aufweisen. Durch die hohe Anzahl der dabei benötigten optischen Komponenten wird nicht nur das Gerätedesign erschwert, sondern auch die bei der Herstellung durchzuführende Justage aller jeweils beteiligten Komponenten zueinander gestaltet sich schwieriger und aufwändiger. Auch steigt mit der Anzahl der Komponenten die Wahrscheinlichkeit, dass eine dieser Komponenten durch innere oder äußere Einflüsse dejustieren kann und dadurch das Gerät an Genauigkeit verliert.

Ein Einbau zusätzlicher, insbesondere beweglicher Komponenten in das Vermessungsgerät kann dessen Messgenauigkeit und Stabilität abträglich sein, weshalb eine Vereinfachung des Strahlengangs, eine Verringerung der Komponentenanzahl und eine Vermeidung von beweglichen Teilen wie Spiegelscannern anzustreben ist.

Es ist daher eine Aufgabe der vorliegenden Erfindung die Messungen mit einem Vermessungsgerät zu verbessern.

Ein Teil dieser Aufgabe besteht darin, bereits im Stand der Technik bekannten Messverfahren zu verbessern und zu automatisieren, sowie neue Messfunktionalitäten dem Benutzer bereitzustellen.

Eine Verbesserung der Justierhaltigkeit und damit der Messgenauigkeit des Vermessungsgeräts ist ein weiterer Teil dieser Aufgabe.

Es ist auch eine Aufgabe das Vermessungsgerät in seinem Aufbau zu vereinfachen oder anders gesagt, ein Vermessungsgerät bereitzustellen, welches einfacher und kostengünstiger realisierbar ist, also beispielsweise einen geringern Bauteil- und Montageaufwand aufweist, ohne dass dieses die erzielbare Messgenauigkeit einschränkt.

Eine Teilaufgabe ist dabei auch ein Vermessungsgerät bereitzustellen, welches in hochintegrierter Form herstellbar ist und möglichst wenige Teile aufweist - Speziell möglichst wenige bewegliche und/oder hochgenau zu justierende Teile.

Eine Aufgabe ist auch die Justage bei der Montage des Geräts einfacher zu gestalten bzw. die Notwendigkeit einer exakten Justage von optischen Komponenten bei der Produktion und/oder Kalibrierung des Geräts zu vermeiden.

Eine weitere Aufgabe ist es dem Benutzer beim Gebrauch des Messgeräts die Möglichkeit zu geben, vor Ort, also auch im Feld, eine präzise Justierung der den Messeinheiten des Vermessungsgeräts zugeordneten Ziellinien zu ermöglichen, beispielsweise um im Rahmen einer 2-Lagenmessung ermittelte Abweichungen physikalisch und nicht nur rein numerisch zu Korrigieren.

Eine Teilaufgabe ist auch eine Verbesserung bzw. Vereinfachung der Anzielung eines Messziels bei einer Winkel- und/oder Entfernungsmessung zu erzielen.

Im speziellen ist es eine Aufgabe der vorliegenden Erfindung, die oben angeführten Aufgaben gemeinsam in einem Vermessungsgerät zu lösen.

Im Weiteren beschrieben wird ein erfindungsgemäßes optisches Vermessungsgerät, beispielsweise ein Tachymeter, Laserscanner, Lasertracker, eine Totalstation, oder ähnliches. Das Gerät hat eine Basis zur Aufstellung oder Stationierung des Vermessungsgeräts und eine, gegenüber der Basis um zwei mit Winkelmessern versehenen Achsen drehbaren, Anzieleinheit. Die Anzieleinheit definiert eine Zielachse zur Anzielung eines zu vermessenden Zielobjekts (bzw. eines Messpunktes auf dem Zielobjekt), welche um die zwei Achsen drehbar ist. Die Anzieleinheit hat dabei einen ersten Strahlengang zum Aussenden optischer Strahlung in Richtung des, insbesondere in Polarkoordinaten, zu vermessenden Zielobjekts, und einen zweiten Strahlengang zum Empfang eines vom Zielobjekt zurückgeworfenen Anteils der optischen Strahlung durch ein optoelektronisches Empfangselement.

Erfindungsgemäß weist zumindest einer der Strahlengänge ein optisches Element auf, welches mit einem optisch transparenten, verformbaren Volumenkörper ausgebildet ist, welcher zumindest eine Grenzfläche hin zu einem Medium mit einem von dem Volumenkörper abweichenden optischen Brechungsindex aufweist.

Dabei ist die Grenzfläche mittels mehrerer elektrischer Ansteuersignale derart verformbar, dass dadurch die optischen Brechungseigenschaften des Elements in zumindest zwei nichtzusammenfallenden Richtungen unterschiedlich variierbar sind.

Insbesondere liegen dabei die Richtungen zumindest annähernd orthogonal zu einer optischen Achse des optischen Elements. In einer Ausführungsform kann das optische Element als eine Flüssiglinse ausgebildet sein und der verformbare Volumenkörper durch eine Flüssigkeit gebildet werden, deren Grenzfläche mittels elektrischer Ansteuersignale verformbar ist.

Insbesondere weist zumindest einer der Strahlengänge beispielsweise ein optisches Element in Form einer Flüssiglinse auf, welche als ein Element mit einer optisch transparenten Flüssigkeit ausgebildet ist, die zumindest eine Grenzfläche hin zu einem Medium mit einem von der Flüssigkeit abweichenden optischen Brechungsindex aufweist. Die Grenzfläche ist dabei mittels mehreren elektrischen Ansteuersignalen derart verformbar, dass dadurch die optischen Brechungseigenschaften des Elements in zumindest zwei nichtzusammenfallenden Richtungen unterschiedlich variierbar sind.

Insbesondere ist dabei die Grenzfläche derart verformbar, dass dadurch die optischen Brechungseigenschaften des Elements in drei Dimensionen, nämlich longitudinal und in zwei Richtungen transversal zur Strahlrichtung variierbar sind. In einem Fall wird eine Krümmung der Grenzfläche einstellbar verändert indem die Linse gleichmäßig angesteuert wird. In einem anderen Fall werden die Krümmungen der Grenzfläche in zumindest zwei nichtzusammenfallenden Richtungen unterschiedlich variiert. In einem weiteren Fall werden die Krümmungszentren in zumindest zwei nicht zusammenfallenden Richtungen unterschiedlich verschoben.

Mit der Anzahl der Ansteuerungen (z.B. in Form von ansteuernden Aktoren bzw. Elektroden) steigt auch die Anzahl der durchführbaren Einstellmöglichkeiten an der Flüssiglinse und damit nimmt auch der Grad der Beeinflussung und Veränderung der optischen Wellenfront des durch die Linse passierenden Strahls zu. Von Interesse sind dabei insbesondere jene Wellenfrontanteile, welche von einer vordefinierten Sphäre oder Ebene abweichen. Derartige, oft als Wellenfrontaberrationen bezeichnete Abweichungen können beispielsweise als Reihenentwicklung von Zernike-Polynomen dargestellt werden. Die dabei jeweils den Polynomen zugeordneten Koeffizienten der Reihenentwicklung geben Auskunft über die Stärke des jeweiligen Einflusses. Durch geeignete elektrische Ansteuerung der Elektroden können die Koeffizienten erfindungsgemäß auch nachträglich bei einer fix im Gerät verbauten Flüssiglinse, selektiv variiert werden.

Im einfachsten Fall wird dabei mittels der elektrischen Ansteuerung beispielsweise der Koeffizient für das Polynom, welches den Fokus beeinflusst oder jene Koeffizienten, welche eine Keilwirkung für eine transversalen Strahlablenkungen bewirken, verändert. Fokusvariationen sind dabei z.B. in einem Bereich von -40Dpt bis +50Dpt und Strahlablenkungen durch Keilwirkung z.B. in einem Bereich von +/- 5 Grad einstellbar. Mittels zusätzlichen, der Flüssiglinse vor und/oder nachgeschalteten Optiksystemen können die oben genannten Verstellbereiche der Flüssiglinse bei Bedarf entsprechend skaliert werden.

Die den Keilwirkungen zugeordneten, transversalen Richtungen liegen zumindest annähernd in der Elementebene der Flüssiglinse, also anders gesagt in einer Ebene welche zumindest annähernd orthogonal zur optischen Achse der Flüssiglinse (in unangesteuertem Zustand) liegt. Speziell können diese Richtungen dabei den Hauptachsen-Querschnitt des Linsenkörpers in zumindest annähernd gleich große Segmente teilen.

Der erste und/oder zweite Strahlengang kann beispielsweise einem optoelektronischen Entfernungsmesser und/oder einer automatischen Zielsuche, Zielerkennung, Zielerfassung oder Zielverfolgung des Vermessungsgeräts zugeordnet sein. Speziell kann der erste Strahlengang eine Laserziellinie eines optoelektronischen Entfernungsmessers und der zweite Strahlengang ein Empfangskanal des Entfernungsmessers sein.

Um eine Strahlformung und/oder Strahlablenkung in einem Messgerät mit einer Laserlichtquelle zu erzielen, sind bekannte Ansätze wie Mikrospiegelarrays in MEMS-Technologie (z.B. DLP) oder Gitterstrukturen nicht direkt anwendbar. Diese bewirken sichtbare Gitterstrukturen im Strahl oder eine Strahlverzerrung und/oder eine verschlechterte Divergenz, etwa durch Verbiegungen der Micro-Spiegel oder einem ungleichmäßigen Ansteuerverhalten der Einzelspiegel. Ohne weitere Maßnahmen sind die derzeit bekannten Mikro-Spiegel-MEMS für den Anwendungsbereich von Laservermessungen untauglich.

Beispielhafte Ausführungsformen von Flüssiglinsen aus dem Stand der Technik finden sich etwa in US 2012/0063000 bzw. in den darin zitierten Referenzen. Derartige Flüssiglinsen wurden speziell für portable Kameras, wie Video- oder Fotokameras, Webcams, Mobiltelefon- oder Tablet-PC-Kameras, etc. entwickelt. Auch sind dabei Linsen entwickelt worden, welche neben einer veränderlichen Brennweite zur Fokussierung auch eine optische Bildstabilisierung (OIS - Optical Image Stabilisation) ermöglichen. Beispiele hierfür finden sich in WO 2012/035026, WO 2008/037787, US 2010/0295987, US 2012/0026596, EP 2 009 468 oder US RE39,874. In der vorliegenden Erfindung werden die Flüssiglinsen jedoch nicht für deren ursprünglichen Zweck der optischen Bilderfassung des Zielobjekt, also für den bildgebenden Teil, sondern für den radiometrischen, also den vermessenden Teil des Geräts genutzt.

Bei Flüssiglinsen gibt es verschiedenste Ansteuer- und Funktionsprinzipien, beispielsweise Elektrobenetzung, Piezoaktoren, magnetische Aktoren, kapazitive Aktoren, thermische Aktoren, etc. Allen diesen ist gemeinsam, dass die optischen Eigenschaftsänderungen der Flüssiglinse durch ein elektrisches Ansteuersignal hervorgerufen bzw. gesteuert werden.

Anstelle von Linsen, bei welchen die optische Strahlbrechung auf der Verschiebung von Flüssigkeiten basiert, können auch Linsen mit amorphen Polymeren im gummielastischen Zustand angewandt werden. Die dabei verwendeten Stoffe werden oberhalb der Glasübergangstemperatur verwendet, sodass diese elastisch verformbar sind. Als Abgrenzung zwischen zwei derart verformbaren Medien kann eine transparente Membran vorhanden sein. Beispielsweise können erfindungsgemäße Linsen auch mit einem in einer gummielastischen Hülle eingefassten Material ausgebildet sein, welche aus einem (im interessierenden Spektralbereich) transparenten und dehnbaren Material, wie z.B. Polyethen, besteht.

Unter dem Begriff Flüssiglinse, ist hier also ein optisches Element mit einem durch Aktuatoren gezielt verformbarem Volumenkörper zu verstehen, bei welchem mit gezielt ansteuerbarer Verformbarkeit der Grenzflächen eines optisch wirksamen Volumenkörper die optischen Brechungseigenschaften des Elements definiert variierbar sind. Dabei handelt es sich beispielsweise um eine durch Aktuatoren gezielt verformbare Polymerlinse oder um eine Flüssiglinse im klassischen Sinne, wie sie beispielsweise von der Firma Varioptic S.A. hergestellt wird.

Erfindungsgemäß weist das Vermessungsgerät eine Steuereinheit zur Manipulation von wenigstens einem, durch Aktuatoren gezielt verformbaren Volumenkörper auf. Beispielsweise weist das Vermessungsgerät wenigstens einen, durch Aktuatoren gezielt verformbaren, als Linse ausgebildeten Volumenkörper auf, welcher mindestens drei entlang seines Umfangs verteilt angeordnete Aktuatoren aufweist, die von der Steuereinheit derart ansteuerbar sind, dass die optischen Brechungseigenschaften des Elements in zumindest zwei nichtzusammenfallenden Richtungen unterschiedlich variierbar sind.

Ist das optische Element eine Flüssiglinse mit flüssigem Volumenkörper, so umfasst diese beispielsweise eine optisch transparente Kammer mit einem ersten und einem zweiten optisch transparenten Medium, wobei das erste und das zweite Medium nicht mischbar sind und unterschiedliche optische Brechzahlen aufweisen. Bei den Medien, welche jeweils einen Volumenkörper bilden, kann es sich beispielsweise um eine wässrige, alkoholische oder ölige Flüssigkeit, ein Polymer in flüssigem Zustand, ein Silikon oder Silikonöl handeln. Zwischen dem ersten und dem zweiten Medium liegt eine Grenzfläche vor, wobei die Grenzfläche durch die Aktuatoren verformbar ist, so dass die optischen Brechungseigenschaften der Flüssiglinse in zumindest zwei nichtzusammenfallenden Richtungen unterschiedlich variierbar sind. Alternativ kann auch eine dünne, transparente Membrane zwischen den beiden Medien vorhanden sein.

Das optische Element kann beispielsweise auch als eine durch Aktuatoren gezielt verformbare Polymerlinse ausgebildet sein, wobei diese dann in einer Ausführungsform einen optisch transparenten Volumenkörper mit einem optisch transparenten Medium umfasst. Der Volumenkörper ist zumindest auf einer Seite mit einer dünnen, transparenten Membrane verschlossen, die z.B. aus einem Polymer in elastisch verformbarem oder gummielastischem Zustand besteht. Die Membran umfasst einen zentralen Bereich, der einen Linsenkörper darstellt sowie einen peripheren Bereich, der ein Reservoir mit optisch transparentem Medium aufweist, wobei die elastischen Eigenschaften der Membran oder deren Dicke in den verschiedenen Bereichen unterschiedlich sein können. Die Membran ist durch die Aktuatoren derart manipulierbar, dass der Inhalt des Reservoirs in den Linsenkörper und aus dem Linsenkörper in das Reservoir verschiebbar ist. Auf diese Weise sind die optischen Brechungseigenschaften der Polymerlinse in zumindest zwei nichtzusammenfallenden Richtungen unterschiedlich variierbar. Eine andere Art der Polymerlinse kann mit einer Polymermembran ausgebildet sein, welche aktiviert durch Aktuatoren in ihrer Wölbung verändert wird, um die Brechungseigenschaften einzustellen. Das Material einer derartigen Polymerlinse kann ausgewählt sein aus der Gruppe z.B. umfassend Polyethylenglykoldimethacrylat (PEGDM), Hydroxyethylmethacrylat (HEMA), Copolymer aus PEGDM und HEMA, Hydrogel, Silikon, Softsilikon, Polysiloxan, Polyethylen, Polypropylen, modifiziertes Polystryrol oder Polyurethan.

Eine besonders geeignete Form für einen verformbaren Volumenkörper aus gummielastischem Material ist beispielsweise eine Meniskuslinse, da bei Meniskenlinsen mit radialen Kräften eine gut kontrollierte Änderung der beiden Linsenradien bewirkt werden kann. Da die Materialdicke des Volumenkörpers in allen Zonen oder Einfallshöhen in erster Näherung unverändert bleibt, verändern sich beim Aufbringen von radialen Kräften die den beiden Flächen zugeordneten Krümmungsradien unterschiedlich, wodurch - entsprechend der Linsenmacherformel - auch die Brechkraft eines solchen elastischen Elements variiert wird. Meniskenlinsen haben auch bei unterschiedlichen Verformungen den Vorteil eines geringen Öffnungsfehlers, da die Meniskusform über den ganzen Einstellbereich erhalten bleiben kann. Die Wahl und insbesondere die Festlegung der Shore-Härte des Linsenmaterials wird weitgehend durch die Grösse und Dimension des zu verformenden Volumenkörpers festgelegt. Ein mögliches Material mit niedriger Shore A Härte (DIN 53505) wäre eine Silikon-artige Vergussmasse wie Wepesil VT3601E (Shore A Härte: 45), ein Material mit mittlerer Shore A Härte in Form eines Giessharzes wäre beispielsweise Polyurethan Wepuran VT3404 (Shore A Härte: 50).

Für die durch Aktuatoren gezielt verformbaren Volumenkörper gibt es verschiedenste Ansteuer- und Funktionsprinzipien, beispielsweise Elektrobenetzung, Piezoaktuatoren, magnetische Aktuatoren, kapazitive Aktuatoren, thermische Aktuatoren, etc. Die Änderungen der optischen Eigenschaften der durch Aktuatoren gezielt verformbaren Grenzflächen der Volumenkörper werden dabei entweder direkt oder indirekt durch von den Aktuatoren erzeugte, elektrische Ansteuersignale bewirkt.

Zu den Flüssiglinsen entsprechend der vorliegenden Erfindung zählen also auch andere, wie beschrieben einstellbare Linsenelemente, bei welchen die Brechungseigenschaften durch eine während des Betriebs dynamisch, insbesondere elektrisch, ansteuerbare Formänderung von Grenzflächen durchführbar ist.

Da Vermessungsinstrumente und Messgeräte in unterschiedlichsten Aufstellungen, Stationierungen und Gerätelagen zum Einsatz kommen bzw. im Rahmen der Vermessung auch verschwenkt werden, Sollten die Elemente im Vermessungsinstrument möglichst Gravitationsunabhängig sein, um eine ansonsten erforderliche, zusätzliche gravitationsabhängige Nachregelung der Flüssiglinsenansteuerung zu vermeiden. Es werden deshalb in vielen Ausführungsformen von Messgeräten gravitationsinvariante Bauelemente im optischen Pfad bevorzugt, welche unabhängig von deren Raumlage und Gravitationsrichtung ihre Eigenschaften beibehalten. Ein Beispiel einer - dank gleicher Flüssigkeitsdichten - gravitationsfreien Flüssiglinse findet sich etwa in WO 2008/095923.

Mit der mit den transversal variierbaren Brecheigenschaften versehenen Flüssiglinse im Vermessungsgerät entsprechend der vorliegenden Erfindung kann eine Ziellinienmodifikation durchgeführt werden. Hierunter wird verstanden, dass ein Strahlengang des Vermessungsgeräts 11 durch die Flüssiglinse modifiziert wird. Diese Ziellinienmodifikation kann im Vermessungsgerät jeweils statisch - also nach einer ersten Einstellung über längere Zeiträume unverändert bzw. mit keiner oder nur sehr geringer zeitlicher Änderungsrate - und/oder dynamisch - also sich zeitlich ändernd, z.B. zyklisch oder periodisch - erfolgen, wie diese im Folgenden im Detail beschrieben ist. Die statische Ziellinienmodifikation wird dabei im weiteren auch als "Beam Alignment" bezeichnet und die dynamische als "Beam Stearing". Die aufgezeigten Modifikationen können erfindungsgemäß jeweils für sich oder in einer beliebigen Kombination mit der Flüssiglinse bewirkt werden.

Das Beam Alignment kann zu statischen Ziellinienmodifikationen genutzt werden, wie etwa zu Kalibrierungszwecken also z.B. für ein selbstjustierendes Vermessungsgerät. Es erfolgt dabei sozusagen eine automatische Ziellinien-Stabilisierung. Dadurch können beispielsweise auch die hohen Anforderungen bei Fertigung und Justage des Geräts teilweise reduziert werden, da die erfindungsgemäße Flüssiglinse im Vermessungsgerät in der Lage ist (speziell kleinere) Fehljustagen auszugleichen. Durch die elektrische Ansteuerung kann dieses automatisch erfolgen und es kann ein Satz von zugehörigen Kalibrierparametern gespeichert werden, welche bei jedem Einschalten wieder aufgerufen und an der Flüssiglinse eingestellt werden können. Auch können thermische Drifts beispielsweise mit einer vorgängig bestimmten Kalibrationstabelle ausgeglichen werden. Speziell, da sich etliche Justagefehler auch durch die Zwei-Lagen-Messung im Feld bestimmen lassen, kann auch die jeweils erforderliche statische Flüssigkeitslinseneinstellung im Feld und entsprechend der aktuell vorliegenden Umgebungsbedingungen ermittelt werden. Um den möglichen Gerätefehlern gerecht zu werden, ist eine erfindungsgemäße Flüssiglinse erforderlich, welche nicht nur eine einfache Brennweitenverstellung erlaubt, sondern welche derart verformbar ist, dass dadurch die optischen Brechungseigenschaften der Flüssiglinse in zumindest zwei nicht zusammenfallenden Richtungen unterschiedlich variierbar sind, speziell in zumindest zwei Richtungen in einer Ebene normal zur optischen Achse der Flüssiglinse. Insbesondere können die Richtungen dabei die Linsenquerschnittsfläche in zumindest annähernd gleichgroße Segmente teilen.

Mit einem optionalen Erfassen des Auftreffpunktes der ausgesendeten optischen Strahlung auf dem Zielobjekt, z.B. in einem Kamera-Bild, kann die Laserziellinie visualisiert werden und eine aktive Stabilisierung ihrer Lage in Form eines Regelkreises bewirkt werden. Neben der Lage können dabei auch andere Ziellinienparameter wie Spotsize am Target, Strahlform, etc. geregelt werden. Für eine Regelung mit Rückkopplung kann aber auch ein geräteinternes Erfassen des ausgesendeten Lichtes nach der Flüssiglinse angewandt werden, wobei gegebenenfalls auch interne (parasitäre) Spiegel-Effekte an Linsen, Resttransmission an Strahlumlenkelementen, etc. genutzt werden können. Neben dezidierten optisch positionssensitiven Elementen, wie einem PSD, einer Quadraturdiode oder einer oder mehrerer PIN-Dioden, als Istwertgeber, können beispielsweise solche Reflexe auch auf ungenutzte Pixel einer bereits für andere Zwecke vorhandenen Kamera geführt werden. Eine Rückführung in Form einer Bestimmung der aktuellen Linsenform an der Flüssiglinse selbst, etwa durch kapazitive Sensoren, ist eine weitere Möglichkeit eine aktive Regelung der Flüssiglinse zu implementieren. In einem Regelkreis zur Flüssiglinsenansteuerung kann zusätzlich auch die Distanzinformation eines Distanzmessmoduls eingebunden sein, um eine Nachführung der Fokussierung des Messstrahls auf das Zielobjekt gewährleistet.

Neben einer möglichst gezielten Ausrichtung der Entfernungsmessungs-Ziellinie auf die Zielachse des Vermessungsgeräts kann bei verschiedenen Messanwendungen auch ein gezieltes und kontrolliertes Abweichen von dieser Bedingung vorteilhaft sein. Beispiele für derartige erfindungsgemäße Ziellinienmodifikationen mit Flüssiglinsen sind weiter unten gegeben.

Durch die unterschiedliche Verformbarkeit der Flüssiglinse in mehreren Richtungen kann sowohl eine Einstellung der Strahldivergenz bzw. -konvergenz als auch eine Richtungsänderung der emittierten optischen Strahlung erzielt werden. Anders ausgedrückt wird bei Betrachtung der Ausbreitungsrichtung des ausgesendeten Strahlungsbündels sozusagen eine in 2 Dimensionen einstellbare optische Keilwirkung erzielt. Die vorliegende Erfindung geht jedoch bei den - mit der erfindungsgemäßen Flüssiglinse im Vermessungsgerät durchführbaren - Ziellinienmodifikationen noch darüber hinaus, wie die weiteren Beispiele für erfindungsgemäße Ziellinienmodifikationen zeigen.

Beispielsweise kann eine Flüssiglinse in einem Vermessungsgerät in Form eines Laserscanner, wie in der internationalen Anmeldung Nr. PCT/EP2012/058656 beschrieben wird, angewandt werden. Im Rahmen des dort erläuterten Kalibrierverfahren kann eine erfindungsgemäß eingesetzte Flüssiglinse im Vermessungsgerät zur aktiven Fehlerkompensation eingesetzt werden. Dabei können die erfindungsgemäßen Ziellinienmodifikationen mit der Flüssiglinse zum Ausgleich von Ziellinienfehlern genutzt werden. Durch die hoch dynamische Ansteuerbarkeit von Flüssiglinsen kann dieses sogar während des Scannbetriebs erfolgen, also etwa eine variable Achsanpassung und/oder ein Autofokus innerhalb einer Rotation des Scanners. Aufgrund des gerätespezifischen Aufbaus eines Scanners wird dabei die Flüssiglinse vorteilhaft im Gerätekörper angebracht, also nur um eine der beiden Achsen rotiert.

Wird zum Beispiel mit einem Laserscanner über größere Distanzen ein Objekt vermessen, so dreht sich der Ablenkspiegel für die Messstrahlung während der Flugzeit (TOF) des Lichtpulses weiter, wodurch sich auch das Gesichtfeld (FOV) des Empfängers verschwenkt. Bei raschen Scannbewegungen und/oder großen Distanzen muss dieser Aspekt im Design des optischen Gesichtsfeldes des Empfängers berücksichtigt werden, z.B. indem das Gesichtsfeld winkelmässig vergrößert wird, etwa durch eine vergrößerte Kreisblende um sicherzustellen, dass der Lichtpuls am Ende der Flugzeit (bei entsprechend weitergedrehtem Ablenkspiegel) noch im Bereich des FOV liegt und damit empfangen werden kann. Ein größeres Gesichtsfeld hat aber den Nachteil, dass mehr Umgebungslicht eingefangen wird und das Messsignal durch Schrotrauschen verschlechtert wird. Eine bekannte Lösung hierzu sind optomechanische Derotatoren. Die Schar der vom Objekt reflektierten und auf der Empfangsblende ankommenden Messpulse beschreibt zumindest annähernd eine Kreisbahn. Mittels eines Dove-Prismas kann die Drehbewegung auf der Kreisbahn zumindest in ein feststehendes Polarwinkelsegment abgebildet oder transformiert werden, wodurch die Empfangsblende schlitzförmig und kleiner als ohne aktive Kompensationsmaßnahme ausgebildet werden kann. Bei erfindungsgemäßem Einsatz einer Flüssiglinse im Strahlengang des Entfernungsmessers, kann die durch die Pulsschar beschriebene Kreisbahn zurück auf die optische Achse des Empfängers transformiert werden. Dies kann erreicht werden, indem die Flüssiglinse synchron zur Bewegung der Scannerablenkung, also z.B. zur Drehung des Ablenkspiegels, angesteuert wird. Speziell kann dazu eine Flüssiglinse im Empfangsstrahlengang derart angesteuert werden, dass ihre optischen Brechungseigenschaften in zumindest zwei nicht zusammenfallenden Richtungen unterschiedlich variiert werden (speziell in zumindest zwei Richtungen in einer Ebene normal zur optischen Achse der Flüssiglinse), sodass der Empfangsstrahl stets durch ein kleine (z.B. Kreisförmige) Blende auf den Empfänger trifft und somit das Gesichtsfeld des Empfängers klein gewählt werden kann und weniger Umgebungslicht eingefangen wird. Die Flüssiglinse kompensiert bzw. verkleinert dabei also die zuvor beschrieben Kreisbahn, vorzugsweise auf einen Punkt.

Unter Nutzung einer erfindungsgemäß eingesetzten Flüssiglinse im Vermessungsgerät, können die Ziellinienmodifikationen durchgeführt werden, ohne dass dabei aufwändige Mechaniken und bewegliche Teile zum Einsatz kommen und der Strahlengang im Gerät sich weiter verkompliziert. Vielmehr vereinfacht sich der Strahlengang und die benötigten Komponenten im Entfernungsmesser und auch die Komponentenjustage ist einfacher, da viele Ungenauigkeiten von der in mehreren Richtungen unterschiedlich verstellbaren Flüssiglinse durch entsprechende Ansteuerung ausgleichbar sind.

Erfindungsgemäss können also mit Hilfe der Flüssiglinse die Anforderungen an die Werkskalibrierung und Montagegenauigkeit in etlichen Bereichen deutlich relaxiert werden, da mit dem erfindungsgemässen Aufbau, viele Fehler im Feld, also während des Betriebs oder einer vorangehenden Stationierung und Kalibrierung detektiert und - falls erforderlich - auch ausgeglichen werden können. Beispielsweise kann mit einer bekanten Zwei-Lagen-Messung ein Achsfehler im Feld festgestellt werden und dieser durch entsprechende Ansteuerung der Flüssiglinse kompensiert werden. Dabei werden auch alle aktuellen Umgebungsbedingungen berücksichtigt. Die Flüssiglinse erlaubt eine direkte Anpassung der Optik und tatsächliche Beseitigung der Fehler und nicht nur eine numerische Kompensation von vorhandenen Fehlern, ohne dass hierzu mechanische Eingriffe ins Gerät erforderlich sind.

Die erfindungsgemäß bewirkte Reduktion der Anzahl der Komponenten hilft auch die Genauigkeit, speziell die Langzeitstabilität und Robustheit des Vermessungsgeräts zu verbessern.

Des Weitern können mit den erfindungsgemäßen Flüssiglinsen in Vermessungsinstrumenten auch Abbildungsfehler beseitig werden. Beispielsweise werden bei kleinvolumigen Instrumenten die Strahlengänge oft mit einem Hohlspiegel gleichzeitig gefaltet und fokussiert, wobei bei einer außeraxialen Anordnung dieser Spiegel Aberrationen der optischen Wellenfront entstehen. Mittels einer Flüssiglinse mit mehreren Ansteuerungen, z.B. in Form von an den Außenbereichen der Linse platzierten Ansteuerelektroden, können derartige Aberrationen höherer Ordnung kompensiert werden. Beispielsweise lassen sich durch unterschiedliche Steuerspannungen an den Elektroden Astigmatismus oder auch Koma in horizontaler und in vertikaler Querrichtung verändern und dadurch entsprechende Systemfehler des Strahlengangs korrigieren, ohne dass dabei eine mechanische Justage der Position von optischen Elementen im Instrument nötig ist.

Das Beam-Stearing kann für dynamische - also sich zeitlich schnell ändernde Ziellinien-Modifikationen - genutzt werden, wie etwa zum Scannen oder Zielverfolgen. Dabei wird die Flüssiglinse dynamisch angesteuert um eine absichtliche Abweichung von der Zielachse zu erzielen, also anders ausgedrückt ein Abscannen eines Zielbereichs mit dem Entfernungsmesser.

Einige Anwendungsbeispiele, wie Messen von Kanten und Ecken, Flächenneigungsbestimmungen, sind weiter unten erläutert.

Ein weiteres Beispiel einer dynamischen Ziellinienmodifikation stellt eine dynamische Bahnverfolgung eines bewegten Zielobjekts dar. Im Stand der Technik erfolgt diese rein über die Servoachsen des Geräts, welche meist mehr auf präzise denn auf schnelle Bewegungen ausgelegt sind. Zwar kann ein Tachymeter oder Theodolit mit ATR Funktion sich bewegende Ziele verfolgen, auch wenn die Fernrohrausrichtung nicht ideal auf den sich bewegenden Zielpunkt ausgerichtet ist, jedoch hat der EDM oft ein zu kleines Field of View (FOV), sodass es immer wieder zu Signalunterbrüchen kommt. Mittels der erfindungsgemässen Flüssiglinse zur Ziellinienmodifikation kann zum einen das FOV der Entfernungsmessung variiert werden. Dazu kann etwa auch im Empfangsstrahlengang des EDM eine Flüssiglinse zum Einsatz kommen. Zum andern kann eine Richtungssteuerung der EDM-Ziellinie innerhalb des grösseren FOV der ATR erfolgen, also quasi der Distanzmesser auf das Zielobjekt ausgerichtet werden, ohne dass die verhältnismässig trägere Zielachse des Geräts die schnellen Zielbewegungen mitverfolgt. Die Geräteachsen verfolgen dabei das Zielobjekt lediglich langsam und grob, während die schnelleren Bewegungen mithilfe der Flüssiglinse(n) verfolgt werden. Es ist dadurch möglich 3D-Koordinaten bei einer Bahnverfolgung ohne Signalunterbrüche zu vermessen.

Neben den zuvor beschriebenen Wirkungsweisen, kann ein erfindungsgemäßes Beam Alignment mit der Flüssiglinse auch als weitere statische Ziellinienmodifikation eine Variation des Fokus bzw. der Strahldivergenz der Ziellinie erfolgen. Dabei wird mit entsprechender Ansteuerung der Flüssiglinse, insbesondere durch eine Ansteuerung, welche eine zumindest annähernd symmetrische Verformung der Grenzflächen in den beiden Richtungen bewirkt, eine Brennweitenveränderung der emittierten Strahlung vorgenommen werden. Somit kann etwa durch eine geänderte Divergenz im Nahbereich (unter ca. 30m) eine Nahbereichsabschattung der Messstrahlung durch einen koaxialen Strahlengang umgangen werden, also eine so genannte radiometrische Nahbereichsoptik in automatisch und frei konfigurierbarer Weise implementiert werden. Auch kann die Emissionsdivergenz bei Reflektormessungen - etwa mit Prisma-Zielen - größer gewählt werden als bei reflektorlosen Messungen, bei welchen vorzugsweise ein fokussierter Strahl mit geringer Divergenz zum Einsatz kommt. Mit der erfindungsgemäßen Flüssiglinse im Vermessungsgerät kann dieses im Rahmen einer Ziellinienmodifikation erfolgen, ohne dass mechanisch bewegte Teile, wie Einschwenklinsen aus dem Stand der Technik erforderlich sind.

Mittels der Brennweitenveränderung kann bei einer Messung auf reflektierende Zielmarken auch die Stärke des Empfangssignals in einem gewissen Bereich eingestellt werden. Beispielsweise kann die Strahldivergenz umgekehrt proportional mit der zunehmenden Distanz verändert werden, der Lichtfleck am Reflektor hat dadurch einen konstanten Durchmesser. Die Bestrahlungsstärke am Reflektor kann dadurch zumindest annähernd konstant gehalten werden, womit die Signalstärke auf dem Empfänger auch zumindest annähernd gleich bleibt (gegebenenfalls kann dabei auch die hier vernachlässigte atmosphärische Transmission berücksichtigt werden). Die Signaldynamik, welche von der Empfangselektronik zu bewältigen ist, kann dadurch wesentlich reduziert werden und/oder die absolute Distanzmessgenauigkeit kann verbessert werden.

Neben dem Aussenden eines möglichst niedrig divergenten Strahls zur reflektorlosen Entfernungsmessung, kann auch eine Fokussierung des Strahls auf das Zielobjekt als eine Art Autofokus-Funktion durchgeführt werden, was nicht nur für eine bessere Sichtbarkeit des Zielpunkts oder eine höher Signalintensität im EDM genutzt werden kann, sondern auch durch den kleineren Messpunkt eine höhere Punktauflösung, z.B. beim Erstellen von Punktwolken mit einem Tachymeter oder einem Laserscanner ermöglicht. Zur Einstellung der Fokuslänge kann dabei das Ergebnis der Entfernungsmessung herangezogen werden. Mit dieser Ziellinienmodifikation kann ein Benutzer z.B. auch während der Messung oder zwischen zwei Messungen einen gewünschten Durchmesser des Zielpunktes der Entfernungsmessers auf dem Zielobjekt vorgeben, etwa um speziellen Vermessungsaufgaben oder Geometrien des Zielobjekts gerecht zu werden.

Als weitere statische Ziellinienmodifikation durch die Flüssiglinse kann beim Aussenden von zwei Wellenlängen zur Distanzmessung, sei es wahlweise (z.B. IR oder sichtbar) oder gemeinsam (IR mit sichtbarem Pilotstrahl zur Ziellinienvisualisierung) eine Ausrichtung der jeweiligen optischen Achsen oder Kompensation von unterschiedlichen Divergenzen mit einer oder mehreren Flüssiglinsen bewirkt werden. Es sind somit z.B. auch die im Stand der Technik bekannten Laserdioden mit zwei Emissionszonen für verschiedene Wellenlängen, welche sehr eng nebeneinander liegen einsetzbar, da mit der Flüssiglinse die beiden Kanäle optisch zusammengelegt werden können. Somit kann z.B. ein divergenter IR Strahl für kooperative Zielobjekte oder ein kollimierter, sichtbarer Strahl für reflektorlose Ziele emittiert werden, wobei die Umschaltung und die Sicherstellung derselben Ziellinienausrichtung mit der erfindungsgemäss im Vermessungsgerät eingesetzten Flüssiglinse erzielt wird.

Eine weitere Ausprägung einer erfindungsgemäß durchführbaren Ziellinienmodifikation mit der Flüssiglinse stellt eine Kompensation von unterschiedlichen Divergenzachsen von Halbleiterlasern dar. Es erfolgt mit der Flüssiglinse also eine statische Ziellinienmodifikation in Form einer Strahlbündelformung von unterschiedlichen Divergenzwinkeln der von einem Halbleiterlaser emittierten optischen Strahlung. Entsprechend der vorliegenden Erfindung lassen sich diese durch die unterschiedliche Verformbarkeit der Flüssiglinse in mehreren Richtungen kompensieren. Restastigmatismus von Laserdioden ist dadurch behebbar und der Lichtfleck am Zielobjekt kann dadurch weniger elliptisch und in der Regel auch kleiner geformt werden, wodurch auch die Bestrahlungsstärke am Zielobjekt größer wird.

Werden zwei Flüssiglinsen in einem bestimmten Abstand zueinander eingesetzt, so ergeben sich weitere Strahlformungsmöglichkeiten. Durch die flexible Ansteuerbarkeit der Verformung eines Linsenpaares kann z.B. das elliptische Strahlenbündel einer Laserdiode auf ein rundes Bündel transformiert werden. Dadurch kann die Halbleiterlaserdiode in fast beliebiger Orientierung ins Gerät eingebaut werden. Es müssen auch keine optischen Elemente daraufhin mechanisch justiert werden, sondern mit Hilfe der Flüssiglinse(n) kann die Justage erst im Anschluss an die Geräteassemblierung, beim Setzten der Werkseinstellungen oder gar später im Feld erfolgen.

Eine weitere statische Variation durch die Flüssiglinse kann in Form eines Ablenkens von zumindest einem Teil der erzeugten Messstrahlung auf einen geräteinternen Referenzpfad bekannter Länge erfolgen, um eine Kalibrierung der Entfernungsmessfunktionalität durchzuführen. Mit der Flüssiglinse kann dabei eine Variation des Anteils der Strahlung, welcher über den internen Pfad gelenkt wird als Ziellinienmodifikation durchgeführt werden, ohne dass hierzu bewegliche mechanische Teile im Gerät erforderlich sind.

Die zuvor beschriebenen Wirkungsweisen des erfindungsgemäß durchführbaren Beam Alignment mit der Flüssiglinse im Vermessungsgerät können auch für weitere, im Stand der Technik nicht bekannte dynamische Ziellinienmodifikation angewandt werden. Mit der Flüssiglinse im Vermessungsgerät kann z.B. ein senderseitiger Lichtmischer zur Glättung der Modulationswellenfront (FRD) des Entfernungsmessers in einfacher Weise umgesetzt werden. Durch ein Laserstrahl-Mixen mit dynamisch bewegter Flüssiglinse, kann die FRD verbessert werden, speziell wenn die Brechungseigenschaften der Flüssiglinse erfindungsgemäss in zwei oder mehr unterschiedlichen Richtungen verschiedenartig modifiziert werden können. Zudem kann mit Flüssiglinsen auch eine hohe Dynamik bzw. Bandbreite der Modifikation erzielt werden. Diese dynamische Ziellinienmodifikation ist nicht nur bei vom Vermessungsgerät emittierter Entfernungsmessstrahlung sondern auch bei emittierter ATR-Strahlung vorteilhaft anwendbar.

Eine dynamische Verformung der erfindungsgemässen Flüssiglinse im Vermessungsgerät, welche während der Emission der Mess- und oder ATR-Strahlung erfolgt, kann auch zur Unterdrückung von Speckles-Einflüssen angewandt werden. Dazu genügen vielfach lediglich sehr geringe Veränderungen der Brechungseigenschaften der Flüssiglinse, also lediglich geringe Verformungen ihrer Grenzfläche. Diese können mit entsprechend hohen Frequenzen - allenfalls auch überlagert mit den anderen hier beschriebenen Ziellinienmodifikationen, durchgeführt werden. Beispielsweise kann ein periodisches, minimales Verändern der Winkelauslenkung der Flüssiglinse, also eine Zittern des emittierten Strahls, oder ein geringfügiges Variieren der Brennweite, also ein Atmen der Fokussierung, Durchgeführt werden. Mit den mehrfach ansteuerbaren Flüssiglinsen sind aber auch komplexere Verformungen der Linsengrenzfläche zur Bewirkung eines derartigen Effektes durchführbar.

Eine weitere erfindungsgemässe Anwendung einer Flüssiglinse kann im Empfangsstrahlengang eines ATR-Moduls erfolgen, in welchem mit die Flüssiglinse eine variable Fokussierung des Bildsensors auf das Zielobjekt oder Target, beispielsweise eines retroreflektiven Tape-Targets als einer retroreflektiven Folie zur Anbringung am Zielbojekt, durchführbar ist. Bei Verwendung eines Tripelprismas als ATR-Target kann die Fokussierung entsprechend auf die doppelte Distanz zum Target erfolgen. Im Stand der Technik ist der Empfangsstrahlengang einer ATR mit einer Fixfokus-Optik auf unendlich eingestellt, was jedoch im Nahbereich, insbesondere bei Tape-Targets, eine unscharfe Abbildung des Lichtflecks auf dem Bildsensor oder PSD der ATR ergibt, wodurch die Richtungsmessung ungenau wird. Mit einer erfindungsgemässen Flüssiglinse im Empfangsstrahlengang der ATR kann eine zumindest annähernd scharfe Abbildung des ATR-Targets, speziell auch im Nahbereich, erzielt werden. Sind eine oder mehre erfindungsgemässen Flüssiglinsen im ATR-Empfangsstrahlengang in zumindest zwei Richtungen unterschiedlich variierbar kann damit beispielsweise auch das Gesichtsfeld des ATR-Empfängers horizontal oder vertikal verschoben werden, z.B. um ohne Achsbewegungen einen grösseren Bereich horizontal und oder vertikal nach Targets abzuscannen. Es kann mit erfindungsgemässen Flüssiglinsen ferner eine Zoom-Funktion des Empfangskanals der ATR erzielt werden um etwa in einer ersten Ansteuerung der Flüssiglinse mit einem grösseren Gesichtsfeld eine grobe Lage des Targets zu ermitteln, diese Lage gegebenenfalls durch verschwenken der Geräteachsen grob anzuzielen und anschliessend in einer zweiten Ansteuerung der Flüssiglinse mit einem kleineren Gesichtsfeld als zuvor, in bekannter Weise eine genaue Bestimmung der Target-Lage durchzuführen.

Das erfindungsgemäße Verfahren und die erfindungsgemäße Vorrichtung werden nachfolgend anhand von konkreten Ausführungsbeispielen, welche in den Zeichnungen schematisch dargestellt sind, rein beispielhaft näher beschrieben. Dabei wird auch auf weitere Vorteile der Erfindung eingegangen. Im Einzelnen zeigen:
- Fig. 1: ein Beispiel einer Ausführungsform eines Vermessungsgeräts im Sinne der vorliegenden Erfindung;
- Fig. 2a: eine schematische Darstellung eines inneren Aufbaus einer ersten Ausführungsform eines erfindungsgemässen Vermessungsgeräts;
- Fig. 2b: eine schematische Darstellung eines inneren Aufbaus einer zweiten Ausführungsform eines erfindungsgemässen Vermessungsgeräts;
- Fig. 2c: eine schematische Darstellung eines inneren Aufbaus einer dritten Ausführungsform eines erfindungsgemässen Vermessungsgeräts;
- Fig. 3a, 3b und 3c: eine erste beispielhafte Skizze von erfindungsgemässen Ziellinienmodifikationen mit einer Flüssiglinse im Vermessungsgerät;
- Fig. 4a, und 4b: eine zweite beispielhafte Skizze von erfindungsgemässen Ziellinienmodifikationen mit einer Flüssiglinse im Vermessungsgerät.
- Fig. 5: eine erste beispielhafte Wirkungsweise einer Ausführungsform einer Flüssiglinse entsprechend der vorliegenden Erfindung;
- Fig. 6a, 6b und 6c: eine zweite beispielhafte Wirkungsweise einer Ausführungsform einer Flüssiglinse entsprechend der vorliegenden Erfindung;
- Fig. 7a, 7b und 7c: eine dritte beispielhafte Wirkungsweise einer Ausführungsform einer Flüssiglinse entsprechend der vorliegenden Erfindung;
- Fig. 8a, 8b, 8c, 8d, 8e, 8f, 8g, 8h und 8i: beispielhafte Ziellinienmodifikationen bei einem erfindungsgemässen Vermessungsgerät mit Flüssiglinse;
- Fig. 9: eine beispielhafte schematische Darstellung einer ersten Ziellinienmodifikation mit einer Flüssiglinse entsprechend der vorliegenden Erfindung;
- Fig. 10: eine beispielhafte schematische Darstellung einer zweiten Ziellinienmodifikation mit einer Flüssiglinse entsprechend der vorliegenden Erfindung;
- Fig. 11: eine beispielhafte schematische Darstellung einer dritten Ziellinienmodifikation mit einer Flüssiglinse entsprechend der vorliegenden Erfindung;
- Fig. 12: eine beispielhafte schematische Darstellung einer vierten Ziellinienmodifikation mit einer Flüssiglinse entsprechend der vorliegenden Erfindung;
- Fig. 13a, 13b und 13c: Beispiele von Ziellinienanpassungen bei Vermessungsaufgaben mit einem erfindungsgemässen Vermessungsgerät mit Flüssiglinse;
- Fig. 14a, 14b und 14c: weitere Beispiele für Ausführungsformen von erfindungsgemässen Vermessungsgeräten mit Flüssiglinsen zur Ziellinienmodifikation.

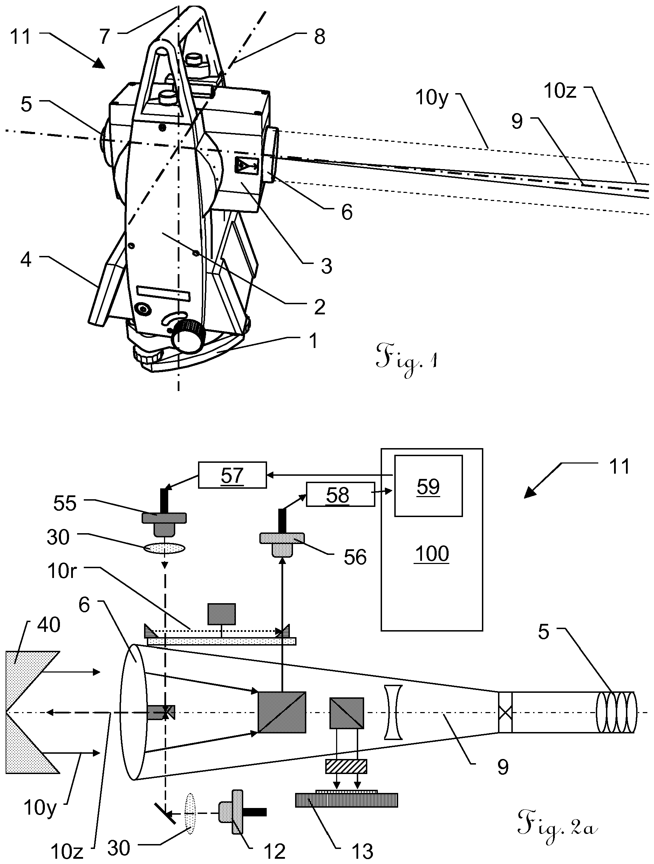

In **Fig. 1** ist ein Beispiel eines Vermessungsgeräts 11 gezeigt, in welchem die vorliegende Erfindung angewandt wird. Das Gerät 11 besitzt eine Basis 1 mit welcher es, z.B. mit einem hier nicht dargestellten Stativ, zu Vermessungszwecken stationiert wird. Auf der Basis 1 ist, mit einem um eine Stehachse 7 drehbaren Vertikal-Goniometer ein Gerätekörper 2 des Geräts 11 angebracht. Die Basis 1 verfügt über Einrichtungen zur Horizontierung des Geräts 11 - oder anders ausgedrückt zur Lotrechtstellung der Stehachse 7, beispielsweise mit Hilfe von drei Stellschrauben und einer Dosenlibelle und/oder einer elektronischen Libelle. Der Gerätekörper 2 weist eine Bedieneinheit 4 auf und ist durch ein um die Kippachse 8 drehbaren Kippachsen-Goniometer mit der Anzieleinheit 3 verbunden. Die Anzieleinheit 3 weist im gezeigten Fall ein Fernrohr mit einem Objektiv 6 und mit einem Okular 5 auf, ist also mit einem Durchsichtkanal ausgestattet. Andere Ausführungen können neben oder alternativ zum optischen Teleskop auch ein digitales Okular und/oder eine Bildschirmanzeige auf der Bedieneinheit 4 oder einem externen Steuerungsgerät aufweisen. Die Anzieleinheit 3 hat eine Zielachse 9, welche im Idealfall exakt senkrecht auf der Kippachse 8 des Kippachsen-Goniometers steht, welche wiederum senkrecht zur lotrecht ausgerichteten Stehachse 7 des Vertikal-Goniometers ist. Es sind die drei Achsen also zumindest annähernd orthogonal zueinander und die Zielachse 9 ist bezüglich der Basis um zwei Achsen beweglich. In Richtung der Zielachse 9 erfolgt eine Distanzmessung mit einem optoelektronischen Entfernungsmesser in der Anzieleinheit 3, dessen optische Achse als Ziellinie 10z im Idealfall der Zielachse 9 entspricht. Allfällige Fehler und Abweichungen von dieser Achsanordnung gelten als Instrumentenfehler, welche bei einer Messung berücksichtigt werden müssen um korrekte Ergebnisse zu erhalten. Eine Vielzahl dieser Fehler ist durch die so genannte Zwei-Lagen-Messung feststellbar, woraus für weitere Messungen Kalibrierparameter zur numerischen Korrektur der Messergebnisse bestimmbar sind, wie dieses in den Gerätehandbüchern detailliert beschrieben ist.

Somit kann das Gerät 11 ein angezieltes Zielobjekt mit den beiden Winkelmessern und dem Entfernungsmesser in Polarkoordinaten vermessen. Die Polarkoordinaten können infolge auch in andere Koordinatensysteme umgerechnet werden oder es können auf deren Basis komplexere Vermessungsaufgaben und Berechnungen durchgeführt werden, was z.B. über die Bedieneinheit 4 gesteuert von einem geräteinternen Digitalrechner oder mit einem externen Computer durchführbar ist.

Der optoelektronische Entfernungsmesser ist im gezeigten Beispiel koaxial ausgeführt, es wird also der Strahlengang der ausgesendeten optischen Strahlung 10z und der Strahlengang der vom Gerät 11 empfangenen optischen Strahlung 10y weisen eine zumindest annähernd gemeinsame optische Achse auf, welche im Idealfall auch mit der Zielachse 9 zusammenfällt. Eine Grundvoraussetzung ist dabei, das zumindest sichergestellt ist, dass die optische Achse 10y des Empfängers derart auf die Ziellinie 10z des Senders ausgerichtet ist, dass das Gesichtsfeld des Empfängers den Lichtfleck des Senders auf dem Zielobjekt erfasst.

Bei der gezeigten Ausführungsform handelt es sich um ein optisches Vermessungsgeräts 11 mit einer Basis 1 zur Aufstellung des Geräts 11 und einer gegenüber der Basis 1 um zwei mit Winkelmessern versehenen Achsen 7 und 8 drehbaren Anzieleinheit 3. Die Anzieleinheit 3 hat dabei eine Zielachse 9 zur Anzielung eines zu vermessenden Zielobjekts 40 und weist einen ersten Strahlengang 10z zum Aussenden optischer Strahlung 10 in Richtung des zu vermessenden Zielobjekts 40 und einen zweiten Strahlengang 10y zum Empfang eines vom Zielobjekt 40 zurückgeworfenen Anteils der optischen Strahlung 10 durch ein optoelektronisches Empfangselement auf.

Die im Weiteren erläuterten Ausführungsformen eines erfindungsgemäßen Vermessungsgeräts beschreiben dabei insbesondere die folgenden kurz zusammengefassten Aspekte.

Das optische Element 30 kann entlang des Umfangs des Volumenkörpers beispielsweise mehrere von elektrischen Ansteuersignalen angesteuerte Stellglieder aufweist, insbesondere zumindest vier, vorzugsweise acht oder mehr. Dabei kann das optische Element 30 derart ausgebildet sein, dass dessen optische Brechungseigenschaften derart variierbar sind, dass durch die elektrischen Ansteuersignale eine Variation einer Ablenkung der optischen Achse des betreffenden Strahlengangs durchführbar ist, wobei insbesondere mit der Variation der Ablenkung das optische Signal zwischen einem Referenzpfad und einem Messpfad umschaltbar ist.

Weiters kann das optische Element 30 derart ausgebildet sein, dass dessen optische Brechungseigenschaften derart variierbar sind, dass durch die elektrischen Ansteuersignale eine Variation einer axialen Fokussierung des betreffenden Strahlengangs durchführbar ist, wobei insbesondere die Fokussierung zwischen divergent und konvergent variierbar ist.

Das Vermessungsgerät 11 kann einen optoelektronischen Entfernungsmesser aufweisen und der Strahlengang, welcher die optische Strahlung des Entfernungsmessers führt, kann ein solches optisches Element aufweisen.

Das Vermessungsgerät 11 kann eine automatische Zielerfassung aufweisen und der Strahlengang, welcher die optische Strahlung der Zielerfassung führt, kann ein solches optisches Element aufweisen.

Das optische Element 30 kann im ersten Strahlengang angeordnet sein, wobei mit der Variation der optischen Brechungseigenschaften eine statische und/oder dynamische Ziellinienmodifikation durchführbar ist.

Mit der statischen Ziellinienmodifikation kann beispielsweise die Zielachse in ihrer Ausrichtung kalibrierbar sein.

Das Vermessungsgerät 11 kann ein optisches Sensorelement für eine Erfassung eines Auftreffpunkts der optischen Strahlung auf dem Zielobjekt aufweisen und es kann aufgrund einer Auswertung des Sensorelements eine Regelung der Ansteuersignale des optischen Elements derart erfolgt, dass eine Form und/oder eine Lage des Auftreffpunkts gegenüber der Zielachse einem Sollwert entspricht.

Erfindungsgemäß kann also ein Verfahren zur Vermessung eines Zielobjekts 40 mit einem optischen Vermessungsgerät durchgeführt werden, mit einer Aufstellung einer Basis des Geräts, einem Anzielen des Zielobjekts mit einer Zielachse einer Anzieleinheit durch ein Drehen der Anzieleinheit um zwei, mit Winkelmessern versehenen Achsen gegenüber der Basis.

Das Anzielen erfolgt dabei mit einem Aussenden von optischer Strahlung entlang eines ersten Strahlengangs in Richtung des Zielobjekts, und einem Empfangen eines vom Zielobjekt entlang eines zweiten Strahlengangs zurückgeworfenen Anteils der optischen Strahlung durch ein optoelektronisches Empfangselement.

Dabei erfolgt erfindungsgemäß ein Modifizieren des ersten und/oder zweiten Strahlengangs mit einem Variieren von optischen Brechungseigenschaften eines, sich in zumindest einem der Strahlengänge befindenden optischen Elements in zumindest zwei nichtzusammenfallenden Richtungen. Dies erfolgt durch ein unterschiedliches Verformen einer Grenzfläche eines optisch transparenten verformbaren Volumenkörpers hin zu einem Medium mit einem von dem Volumenkörper abweichenden optischen Brechungsindex in den zumindest zwei nichtzusammenfallenden Richtungen, welches Verformen mittels mehrerer elektrischer Ansteuersignale gesteuert wird.

Das Modifizieren kann dabei als statische Ziellinienmodifikation in Form einer Strahlbündelformung von unterschiedlichen Divergenzwinkeln der ausgesendeten optischer Strahlung erfolgen.

Das Aussenden der optischen Strahlung kann mit zumindest zwei Wellenlängen, insbesondere einer sichtbaren und einer unsichtbaren Wellenlänge, erfolgen, beispielsweise mit einer Laserlichtquelle mit welcher von einem einzigen Bauteil die zwei Wellenlängen emittierbar sind. Dabei kann das Modifizieren als statische Ziellinienmodifikation die optische Strahlung der ersten und/oder zweiten Wellenlänge gegenüber der Zielachse ausrichtet.

Das Modifizieren kann dabei als statische Ziellinienmodifikation derart erfolgen, dass eine distanzangepasste Fokussierung des das optische Element enthaltenden Strahlengangs erfolgt, insbesondere mit einer ersten Strahldivergenz für ein nichtkooperatives Zielobjekt, welche geringer ist als eine zweite Strahldivergenz für ein kooperatives Zielobjekt.

Das Modifizieren kann als statische Ziellinienmodifikation derart erfolgen, dass eine Anpassung der Fokussierung des das optische Element enthaltenden Strahlengangs erfolgt, sodass eine Bestrahlungsstärke des optoelektronischen Empfangselements zumindest annähernd konstant gehalten wird.

Das Modifizieren kann auch als dynamische Ziellinienmodifikation mit einem dynamischen Variieren der Brechungseigenschaften eine Reduktion von Speckle-Effekten der optischen Strahlung und/oder eine Glättung einer Modulationswellenfront der optischen Strahlung erfolgen, insbesondere mit einer periodischen Variation der Brechungseigenschaften.

Das Modifizieren kann als dynamische Ziellinienmodifikation mit einer Scann-Bewegung des Strahlengangs in einem Bereich um eine Soll-Zielrichtung zum Zielobjekt erfolgen, insbesondere mit einem Ermitteln einer Kante des Zielobjekts oder einer Neigung einer Fläche des Zielobjekts in Bezug auf die Soll-Zielrichtung durch Vermessung mehrerer Punkte innerhalb der Scann-Bewegung.

Das Modifizieren kann als dynamische Ziellinienmodifikation synchron zu einer Bewegung von zumindest einer der Achsen erfolgen, insbesondere wobei der Strahlengang derart modifiziert wird, dass dieser durch eine statische Empfangsblende auf das optoelektronische Empfangselement ausgerichtet wird.

Die vorliegende Erfindung betrifft auch ein Computerprogrammprodukt mit Programmcode, der auf einem maschinenlesbaren Träger gespeichert ist, oder Computer-DatenSignal, verkörpert durch eine elektromagnetische Welle, zur Durchführung des hier beschriebenen Verfahrens, insbesondere wobei der Programmcode eine Ansteuerung eines optischen Elements zur Ziellinienmodifikation in einem erfindungsgemäßen Vermessungsgerät durchgeführt wird, speziell wobei durch den Programmcode eine Ziellinienmodifikation durch eine Regelung anhand einer Erfassung des ersten Strahlengangs erfolgt.

**Fig. 2a** zeigt ein Beispiel für einen internen Aufbau einer ersten Ausführungsform einer Anzieleinheit 3 eines erfindungsgemäßen Vermessungsgeräts 11. Die in diesem Beispiel gezeigten Komponenten und deren Anordnung ist rein schematisch zu betrachten und kann in anderen Ausführungsformen auch variieren oder es können auch Teile davon weggelassen, ergänzt oder in den Gerätekörper 2 verlagert werden.

Das Gerät 11 ist wie in Fig. 1 mit einem Durchlichtkanal ausgestattet, hat also ein Okular 5, durch welches in das Objektiv 6 eintretendes Licht beobachtet werden kann. Alternativ oder zusätzlich kann eine Aufnahme des Beobachtungsbildes durch eine Kamera 13 und ein Betrachten dieses Bildes auf einem Monitor oder Display erfolgen, welches sich im Objektiv 5, am Gerät 11 oder extern davon befinden kann. Die optische Achse der Beobachtung entspricht im gezeigten Fall der Zielachse 9 des Geräts 11, welche beim Beobachten durch eine Anzielhilfe wie z.B. ein Fadenkreuz oder ähnlichem kenntlich gemacht werden kann.

Weiters sind einige wesentliche Teile des optoelektronischen Entfernungsmesser (EDM) gezeigt. Die Kontrolleinheit 100 des Geräts 11 ist mit der EDM-Steuerung 59 verbunden, welche über eine Treiberstufe 57 die Emission von optischer Messstrahlung durch die Lichtquelle 55 steuert. Die Lichtquelle 55 kann als Halbleiterlichtquelle z.B. als LED oder als Laserlichtquelle in Form eines Festkörperlasers, eines Faserlasers oder eines Halbleiterlasers oder einer Kombination dieser ausgeführt sein. Es kann eine einzige oder mehrere Lichtquellen im Sendestrahlengang geben, welche z.B. unterschiedliche optische Eigenschaften, wie Wellenlängen, Polarisation, etc. aufweisen können. Es kann auch ein Halbleiterlaserelement, mit welchem mehr als eine Wellenlänge von Licht emittierbar ist, genutzt werden, wie dieses weiter unten beschrieben ist.

Im Strahlengang des Aussendens des Geräts 11 ist in der hier gezeigten Ausführungsform eine erfindungsgemäße Flüssiglinse 30 vorhanden, welche als ein Element mit einer im Wellenlängenbereich des optischen Signals optisch transparenten Flüssigkeit ausgebildet ist, die zumindest eine Grenzfläche hin zu einem Medium mit einem von der Flüssigkeit abweichenden optischen Brechungsindex aufweist. Dabei ist die Grenzfläche mittels mehrerer elektrischer Ansteuersignale derart verformbar, dass dadurch die optischen Brechungseigenschaften des Elements in zumindest zwei nichtzusammenfallenden Richtungen unterschiedlich variierbar sind. Bei einer gleichförmigen Variation in den zumindest zwei nichtzusammenfallenden Richtungen kann mit der erfindungsgemässen Flüssiglinse 30 aber auch der Divergenzwinkel der durchtretenden Strahlung eingestellt werden.

Mit der Flüssiglinse kann eine Modifikation der Ziellinie erfolgen. Im gezeigten Fall jener der Entfernungsmessung.

Erfindungsgemäß kann die Flüssiglinse 30 z.B. auch in einem Strahlengang des Aussendens von Zielbeleuchtungsstrahlung, z.B. zur automatischen Zielerfassung (ATR) vorhanden sein, um dessen Ziellinie in analoger Weise, wie bei der Entfernungsmessung beschrieben zu modifizieren.

Es kann bei Vorhandensein von mehreren Lichtquellen 55 erfindungsgemäß auch eine einzige oder mehrere Flüssiglinsen 30 angewandt werden, insbesondere um deren optische Achsen zu koinzidieren oder eine andere der im Folgenden im Details beschriebenen Ziellinienmodifikationen durchzuführen. Beispielsweise kann eine Infrarotlichtquelle zur Entfernungsmessung und ein Pilotstrahl im sichtbaren Bereich zur Visualisierung der IR-Ziellinie auf dem Zielobjekt 40 vorhanden sein, welche erfindungsgemäß mit einer Ziellinienmodifikation durch eine Flüssiglinse 30 automatisch in Übereinstimmung gebracht werden können, ohne dass mechanische Justagen erforderlich sind. In der dargestellten Ausführungsform weist der Strahlengang der ATR-Lichtquelle 12 eine punktiert dargestellte Flüssiglinse 30 auf welche erfindungsgemäß alternativ oder optional zusätzlich vorhanden sein kann. Die zuvor beschriebene eine zweite Lichtquelle zur Zielachsvisualisierung ist der Übersichtlichkeit halber nicht dargestellt.

Weiters gezeigt ist ein, über eine geräteinterne Referenzstrecke geführter, Referenzlichtanteil 10r der Messstrahlung, welcher erfindungsgemäß ebenfalls in Form einer Ziellinienmodifikation mit der Flüssiglinse 30 im Bedarfsfall zu einem Messlichtempfänger 56 geführt werden kann.

Da es sich wie beschrieben um einen koaxial aufgebauten Entfernungsmesser handelt, wird der Strahlengang der Messstrahlung (sowie hier gezeigt auch die Zielbeleuchtungsstrahlung der Lichtquelle 12) auf die optische Achse des Objektivs 6 und somit auf die Zielachse 9 des Geräts eingespiegelt. Wie beschrieben kann es hierbei zu Abweichungen kommen, welche erfindungsgemäß in Form einer Ziellinienmodifikation mit der Flüssiglinse 30 kompensierbar ist. Das Messlicht oder zumindest ein Teil davon wird nun vom Zielobjekt 40 zurückgeworfen. Im gezeigten Fall ist das Zielobjekt 40 als Retroreflektor ausgebildet, es kann sich jedoch bei dem Zielobjekt 40 auch um ein natürliches Ziel, wie z.B. eine Wand oder dergleichen handeln.

Der zurückgeworfene Strahlengang 10y wird auf ein Empfangselement 56 (z.B. eine Photodiode) des EDMs gelenkt, was z.B. über ein wellenlängenselektives Ausspiegeln erfolgen kann. Das empfangene Lichtsignal wird infolge in Block 58 als ein elektrisches Signal aufbereitet und von der Entfernungsmesseinheit 59 wird eine Distanz vom Gerät 11 zum Zielobjekt 40 bestimmt, etwa in Form einer Laufzeitmessung, Phasenmessung, Signalformauswertung oder einer Kombination dieser Prinzipien.

Der Empfangsstrahlengang wird auch auf die Kamera 13, z.B. mit CCD- oder CMOS-Bildsensor aber auch oder zusätzlich als RIM-Sensor, sowie zum Okular 5 gelenkt.

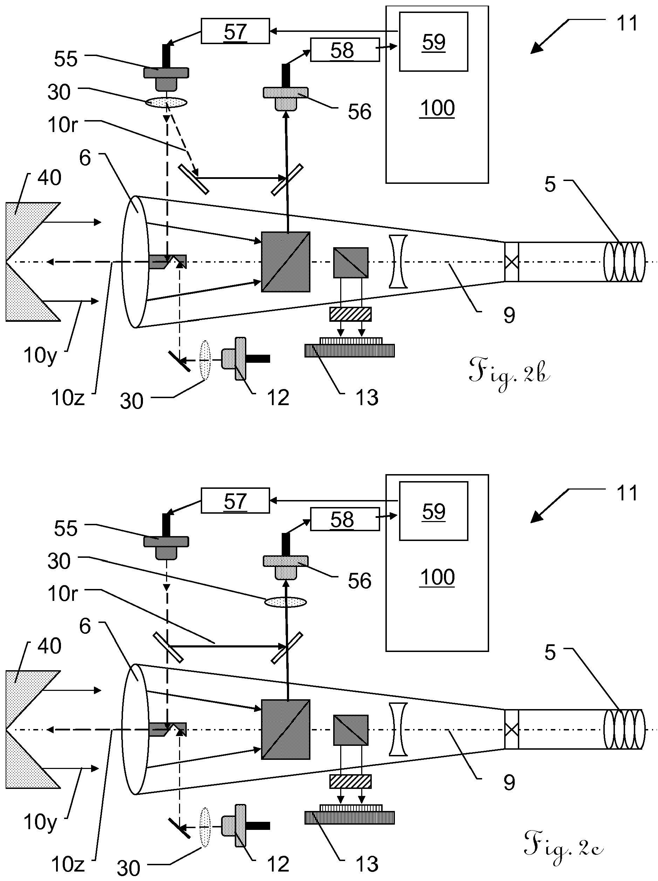

**Fig. 2b** zeigt ein Beispiel für einen internen Aufbau einer zweiten Ausführungsform einer Anzieleinheit 3 eines erfindungsgemäßen Vermessungsgeräts 11. Im Gegensatz zu Fig. 2a ist dabei mit der Flüssiglinse 30 nicht nur eine Richtungsanpassung der Ziellinie 10z durchführbar, sondern auch eine Umlenkung des Sendestrahls auf einen optischen Referenzpfad 10r erfolgen, z.B. mit einem hier dargestellten Umlenk- und Einkoppelspiegel.

**Fig. 2c** zeigt ein Beispiel für einen internen Aufbau einer dritten Ausführungsform einer Anzieleinheit 3 eines erfindungsgemäßen Vermessungsgeräts 11. Im Gegensatz zu den Figuren zuvor, ist die Flüssiglinse 30 hier im Empfangskanal der Entfernungsmessung angeordnet.

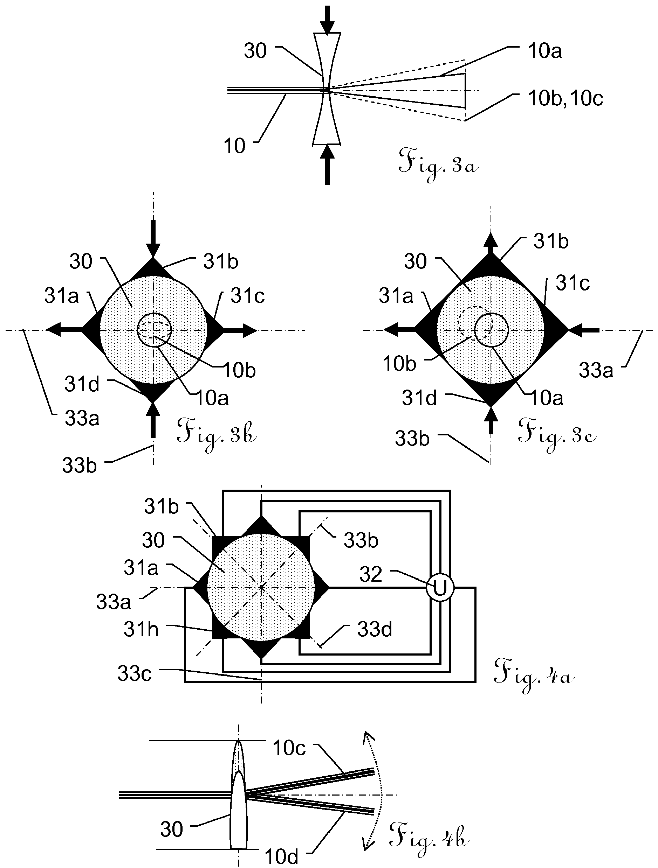

In **Fig. 3a** ist ein Beispiel einer Modifikation der optischen Strahlung 10 entsprechend der vorliegenden Erfindung dargestellt. Es ist eine Ausführungsform einer Flüssiglinse 30 dargestellt, mittels welcher die optische Strahlung 10 variiert wird. In dem gezeigten Beispiel erfolgt dabei eine Ansteuerungsabhängige axiale Veränderung des transmittierten Strahls (also eine Fokusvariation), beispielsweise indem eine zumindest annähernd gleichförmige Ansteuerung entlang des Linsenumfangs erfolgt. Die Proportionen von Strahldurchmessern zu Linsendurchmesser sind hier in den Figuren nicht immer praxisnah dargestellt, speziell kann bei praktischen Realisierungen eine höhere Nutzung der Flüssiglinsenfläche durch den Strahlquerschnitt erfolgen.

**Fig. 3b** zeigt die Flüssiglinse 30 als Element in einer Draufsicht in Richtung der optischen Achse. Es sind vier Stellglieder 31a,31b,31c,31d symbolisiert, mit welchen durch elektrische Ansteuersignale die optischen Brechungseigenschaften des Elements in den Richtungen 33a und 33b unterschiedlich variierbar sind. Die Pfeile am Rand symbolisieren eine Kraftwirkung auf die Flüssigkeit in der Flüssiglinse, welche eine Verformung der Grenzfläche 63g hervorrufen. Im gezeigten Beispiel, wird durch die Ansteuerung die Strahlform 10a der optischen Strahlung 10 in die Strahlform 10b verändert indem ein flüssiger Linsenkörper der Flüssiglinse (30) mittels mehrerer elektrischer Ansteuersignale derart verformbar ist, dass dadurch die optischen Brechungseigenschaften in zumindest zwei nicht zusammenfallenden Richtungen unterschiedlich variierbar sind. Die beispielhaft dargestellte Auslenkung bewirkt in horizontaler und vertikaler Richtung unterschiedliche Brechkräfte. Die zugeteilten Brennweiten sind daher verschieden, die Linse wirkt astigmatisch.

**Fig. 3c** zeigt eine andere Ansteuerung (siehe Pfeile, bei welcher die optische Achse der optischen Strahlung 10 in ihrer Richtung variiert wird, was durch die beiden versetzten Kreise 10a für den Eingangs- und 10c für den Ausgangsstrahl symbolisiert ist. Die unterschiedlichen Variationen der Brechungseigenschaften erfolgt in der hier gezeigten Ausführungsform in orthogonal zueinander stehenden Richtungen 33a und 33b. Dadurch sind Richtungsvariationen der Ablenkung der optischen Achse der Strahlung in einem Raumwinkelsegment, also in zwei orthogonal zueinander stehenden Raumrichtungen durch die Ansteuerungen 31a,31b,31c,31d unabhängig voneinander durchführbar. Bei dieser Ansteuerung verschiebt sich das Linsenzentrum aus der Achse nach links oben, dies bewirkt eine Keilwirkung, der Strahl wird in diese Richtung abgelenkt.

Die Ansteuerung der Flüssiglinse (30) kann durch eine statische Steuerung oder eine dynamische Regelung der Ansteuersignale erfolgen, wobei die Ansteuerung durch einem Computerprogramm auf einem Digitalrechner einer Steuereinheit des Vermessungsgeräts 11 erfolgen kann.

**Fig. 4a und Fig. 4b** zeigt eine weitere Ausführungsform einer Flüssiglinse, welche entlang ihres Umfangs über 8 Stellglieder verfügt. Die hier in den Beschreibungen dargestellten 4 oder 8 Stellglieder sind dabei rein beispielhaft zu sehen und diese Anzahl kann von drei bis zu deutlich höheren Werten ausgeführt werden, je nach den Anforderungen an die Veränderbarkeit und Verteilung der Brechkraft über die freie Öffnung der Flüssiglinse 30.

Diese Stellglieder können wie oben erwähnt z.B. nach dem Prinzip der Elektrobenetzung, einem kräfteinduzierten Flüssigkeitstransport oder anderen, insbesondere in der zitierten Literatur erläuterten Prinzipien arbeiten, wobei die Ansteuerung letztendlich immer elektrisch erfolgt. Es wird dabei die Flüssiglinse, also die geometrische Form und Ausrichtung einer Grenzfläche 63g eines flüssigen oder gummielastischen Linsenkörpers verändert, und nicht etwa eine starre Linse aus Glas oder formfesten Kunststoff verschoben oder verkippt. Durch die erfindungsgemäß vorhandenen, mehrfachen Stellglieder kann die Form der Grenzfläche 63g - und damit die Brechkraft und dessen Verteilung über die Apertur des Elements in den unterschiedlichen Richtungen 33a, 33b, 33c und 33d der Elementebene der Flüssiglinse 30 in kontrollierter Weise unterschiedlich variiert werden. Somit kann nicht nur eine Brennweitenanpassung durch eine kreissymmetrische Wölbungsänderung des Flüssiglinsenkörpers bewirkt werden, sondern die optische Strahlung kann erfindungsgemäß in unterschiedlichster Weise modifiziert werden, wie dieses im Folgenden in Bezug auf die erfindungsgemäße Anwendung in einem Vermessungsgerät erläutert wird. Die elektrische Ansteuereinheit 32 bedient die jeweiligen Stellglieder 31a bis 31h, was durch die Verbindungslinien dargestellt ist. Die Ansteuerungen müssen dabei nicht zwingend kreissymmetrisch als Segmente entlang des Linsenrandes angebracht sein, wie dieses hier vereinfacht gezeigt ist.

Die Ansteuerung der Flüssiglinse 30 erlaubt es, die Linse - also speziell die lichtbrechende Grenzfläche 63g zwischen zwei Medien mit unterschiedlichen Brechungsindizes - kontrolliert zu verformen, wobei erfindungsgemäß mit der mehrfachen Ansteuerung eine unterschiedliche Verformung der Grenzfläche 63g in zumindest zwei unterschiedlichen Richtungen orthogonal zur optischen Achse der eintretenden Strahlung - also sozusagen in der Elementebene der Flüssiglinse - erzielbar ist. Durch geeignete elektrische Ansteuerung der Elektroden der Flüssiglinse können zudem Fehler in der optischen Abbildung oder Strahlformung, wie z.B. Astigmatismus oder Koma verringert oder eliminiert werden. Die gesamte Flüssiglinse als optisches Element wird dabei jedoch nicht in ihrer Position oder Ausrichtung im Gerät verschoben, sondern ist fix montiert. Dieses führt zu einer erfindungsgemäßen Modifizierbarkeit eines Strahlengangs im Vermessungsgerät, insbesondere einer Laserziellinie. Somit sind unterschiedliche Brechungseigenschaften in diesen zumindest zwei Richtungen steuerbar und somit die optische Strahlung in vielfältiger Weise modifizierbar, wie dieses erfindungsgemäß bei der Verbesserung eines Vermessungsgeräts Anwendung findet. Dabei wird der mechanische Geräteaufbau jedoch nicht verkompliziert, sondern kann im Gegenteil - im Vergleich zu einer allenfalls möglichen Implementierung derselben Funktionalitäten mit anderen Mitteln, sogar vereinfacht werden und auch die Anzahl der erforderlichen Komponenten ist geringer.

Neben den gezeigten Ansteueranschlüssen kann es auch noch weitere Sensoranschlüsse zur Bestimmung der aktuellen Linsenform geben. Diese können beispielsweise als Elektroden zur kapazitiven Bestimmung der aktuellen Formung der Linsenflüssigkeit ausgebildet sein, z.B. als weitere Segmente entlang des Linsenumfangs. Neben einer solchen direkten Formbestimmung der Linse kann auch die aktuelle optische Brechungscharakteristik der Linse durch entsprechende Sensorik erfasst werden.

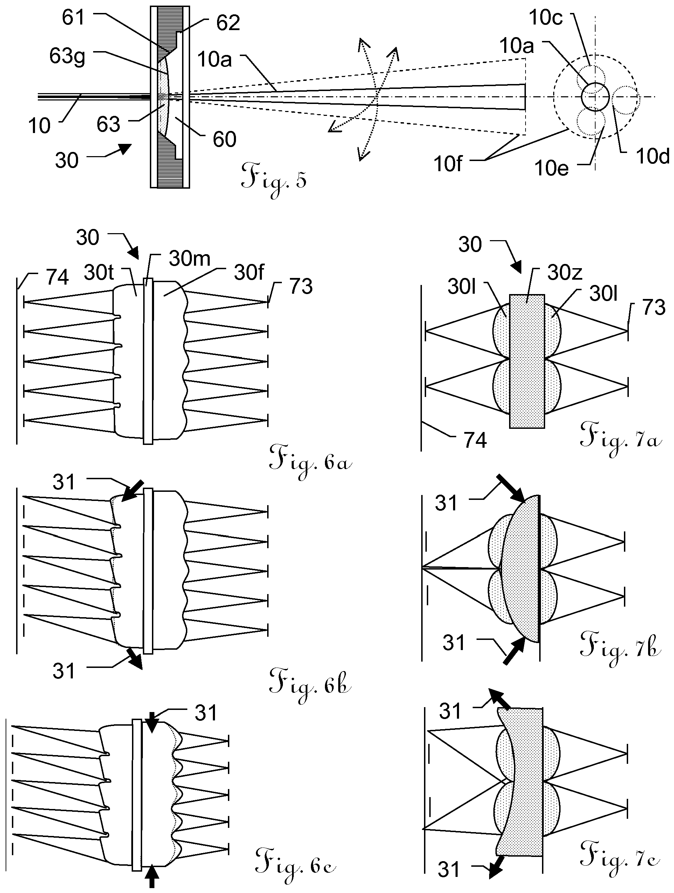

Fig. 5 zeigt ein erstes Beispiel einer Ausführungsform einer Flüssiglinse 30, welche erfindungsgemäß eine optische Strahlung 10 in einem optischen Vermessungsgerät modifiziert. Zum einen können mit entsprechender Ansteuerung die Brechungseigenschaften derart variiert werden, dass die Strahlform in kontrollierter Weise von 10a nach 10f verändert wird, also die Divergenz des Strahlenbündels angepasst wird, in dem eine Brennweitenanpassung der Flüssiglinse 30 erfolgt.

Zum anderen können mit entsprechender Ansteuerung die Brechungseigenschaften der Flüssiglinse 30 derart variiert werden, dass die Strahlrichtung der optischen Achse in kontrollierter Weise von 10a in eine andere Raumrichtung abgelenkt werden (wie mit den Bodenpfeilen angedeutet), z.B. nach 10c,10d,10e.

Die Flüssiglinse 30 ist kreissymmetrisch aufgebaut und hier im Schnitt dargestellt. In diesem Beispiel enthält der Linsenkörper zwei sich nicht vermischende Flüssigkeiten 60 und 63 welche unterschiedliche optische Brechungsindizes aufweisen, sodass an deren Grenzfläche 63g der Strahlengang von durchtretender optischer Strahlung 10 modifiziert wird. Alternativ kann auch eine dünne, transparente Membrane zwischen den beiden Flüssigkeiten vorhanden sein. Haben beide Flüssigkeiten zumindest annähernd dieselbe spezifische Dichte, so können Gravitationseinflüsse auf die Form der Grenzfläche 63g zu einem sehr hohen Anteil ausgeschlossen werden, was speziell bei Vermessungsgeräten mit dreh- und/oder schwenkbaren Anzieleinrichtungen deren Anwendbarkeit vereinfacht, ohne dass die Flüssiglinse abhängig von ihrer Raumlage durch die Ansteuerung nachjustiert werden muss um ihre Eigenschaften konstant zu halten. Wie erwähnt können anstelle der Flüssigkeiten (wie etwa Wasser, Öle, Alkohole, etc.) können auch Polymere im plastisch verformbarem oder gummielastischem Zustand (wie etwa Silikonelastomere, Silikonkautschuke, ...) verwendet werden. Zur Ansteuerung sind die Elektroden 61 und 62 angebracht, mit deren Hilfe, nach dem Prinzip der Elektrobenetzung, die geometrische Form der Grenzfläche variiert werden kann. Neben diesem Wirkprinzip können aber andere Ansteuerungen genutzt werden, bei welchen direkt oder indirekt eine Verformung der Grenzfläche durch ein elektrisches Signal bewirkt werden kann. Z.B. können bekannte Prinzipien wie mittels Magnetspulen bewegte Kolben oder Federn angewandt werden, welche das Grenzvolumen im Außenbereich der Flüssiglinse 30 verändern Die Ansteuerung kann entlang des Umfangs der Flüssiglinse in mehrere Segmente geteilt werden, welche jeweils einzeln ansteuerbar sind und durch welche eine - bezüglich der optischen Achse der Flüssiglinse - nicht rotationssymmetrischen Verformung der Grenzfläche herstellbar ist, sodass die Brechungseigenschaften von jener einer klassischen, idealen Linse zu einer komplexeren Modifikation der durchtretenden optischen Strahlung variierbar sind. Durch entsprechende Ansteuerung kann mit der Flüssiglinse 30 entsprechend der vorliegenden Erfindung neben einer Brennweitenänderung z.B. auch eine Winkelablenkung der optischen Achse des austretenden Lichtes, eine sphärische Aberration, Astigmatismus, Koma, oder andere optische Fehler bewusst eingeführt bzw. korrigiert werden, was weiter unten noch im Zusammenhang mit deren Nutzbarkeit im Vermessungsgerät 11 erläutert wird.

**Fig. 6a bis Fig. 6c** zeigen ein zweites Beispiel einer Ausführungsform einer Flüssiglinse 30 zur erfindungsgemäßen Modifikation eine optische Strahlung 10 in einem Vermessungsgerät in einer Schnittdarstellung. Die gezeigte Flüssiglinse 30 kann z.B. aus einer zweidimensionalen Matrix von den hier in einer Reihe gezeigten Einzelelementen bestehen. Auf beiden Seiten der Flüssiglinse 30 ist jeweils die Bildebene 74 bzw. die Objektebene 73 dargestellt. Die Flüssiglinse 30 ist aus einem ersten Flüssigkeitsteil 30t zur Erzielung einer optischen Keilwirkung und einem davon durch einen festen Mittelteil 30m getrennten, zweiten Flüssigkeitsteil 30f für eine Brennweitenanpassung aufgebaut. Die Flüssiglinse 30 ist dabei wie gezeigt in einzelne Untersegmente aufgeteilt, deren optische Achsen durch die gezeigten Dreiecke zwischen Linse und Bild/Objektebene dargestellt sind.

**Fig. 6a** zeigt die Grundstellung der Flüssiglinse 31 ohne Ansteuerung. Die mit Strichen markierten Bereiche in Bild- und Objektebene werden wie gezeigt jeweils aufeinander abgebildet.

**Fig. 6b** zeigt eine Ansteuerung 31 zur Winkelablenkung der optischen Strahlung durch Verformung des ersten Flüssigkeitsteil 30t. Die Grundstellung ist mit einer punktierten Linie dargestellt. Damit wird die durch die gedrehten Dreiecke dargestellte Winkelablenkung der optischen Achsen der optischen Strahlung bewirkt.

**Fig. 6c** zeigt eine Ansteuerung 31 zur Brennweitenvariation der optischen Strahlung durch Verformung des zweiten Flüssigkeitsteil 30f. Die Grundstellung ist mit einer punktierten Linie dargestellt. Damit wird die durch die gestauchten Dreiecke und die näher liegende Objektebene 73 dargestellt.

In Fig. 6b und Fig. 6c werden alle Untersegmente gemeinsam angesteuert, diese können jedoch auch in Untergruppen oder einzeln angesteuert sein, um spezielle Modifikationen der optischen Strahlung zu erzielen. Offensichtlich ist auch eine Kombination der beiden Strahlmodifikationen aus den beiden Figuren durchführbar.

**Fig. 7a bis Fig. 7c** zeigen ein drittes Beispiel einer Ausführungsform einer Flüssiglinse 30 zur erfindungsgemäßen Modifikation eine optische Strahlung 10 in einem Vermessungsgerät in einer Schnittdarstellung. Dabei ist die Oberfläche der eigentlichen Flüssigkeit 30z der Flüssiglinsen mit optischen Mikro-Komponenten 301 ausgestattet - im gezeigten Beispiel in Form von sphärischen Mikrolinsen, es können aber auch andere Formen genutzt werden, etwa konzentrische Kreise (Fresneloptik) auf einer die Linsenflüssigkeit 301 beinhaltende Membrane. Die kann z.B. aus einer zweidimensionalen Matrix von den hier in einer Reihe gezeigten Mikro-Komponenten 301 bzw. in Form von konzentrischen Ringstrukturen aufgebaut sein.

**Fig. 7a** zeigt eine unverformte Grundstellung der Flüssigkeit 30z ohne Ansteuerung, sowie den daraus resultierenden Strahlengang.

**Fig. 7b** zeigt ein erstes Beispiel einer Ansteuerung 31, und die dadurch bewirkte Modifikation der optischen Strahlung in Form einer kürzeren Brennweite.

**Fig. 7c** zeigt ein zweites Beispiel einer Ansteuerung 31 in Form einer vergrößerten Brennweite.

Neben diesen gezeigten Ansteuerungen 31 sind durch andere Ansteuerungen 31 auch noch weitere Modifikationen der optischen Strahlung 10 erzielbar. Auch kann die geometrische Ausgestaltung der Flüssiglinsen 30 und ihren Komponenten variiert werden.

Weitere erfindungsgemäß erzielbare Modifikationen, welche erfindungsgemäß mit den Flüssiglinsen im Vermessungsgerät durchführbar sind, werden im Folgenden erläutert.

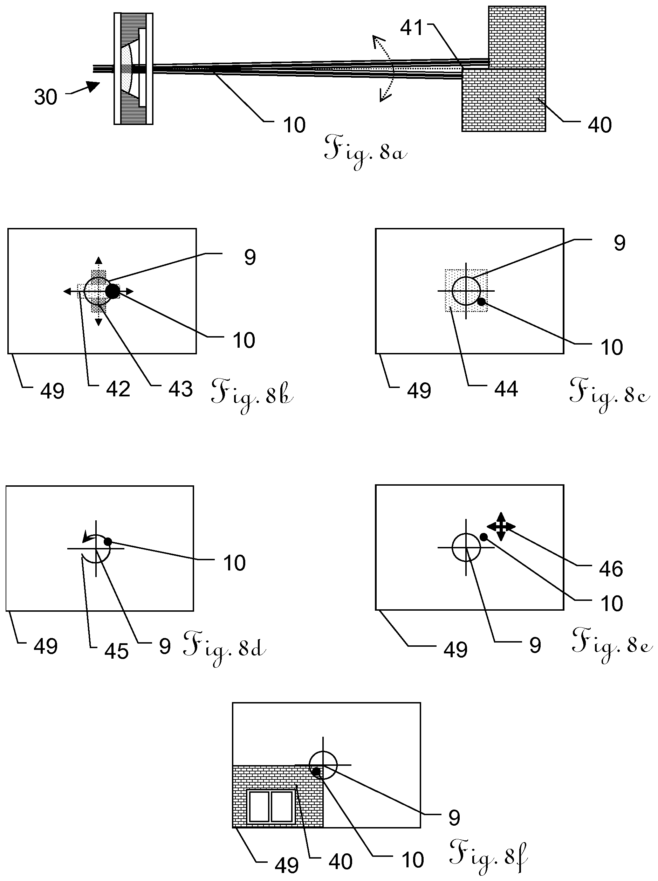

In **Fig. 8a bis Fig. 8i** sind Beispiele für Ziellinienmodifikationen entsprechend der vorliegenden Erfindung mit den in mehren Richtungen unterschiedlich variierbaren Brechungseigenschaften, welche mit einer Flüssiglinse 30 im Strahlengang durchführbar sind, um die Messgenauigkeit, Kalibrierbarkeit und/oder die Funktionalität des Vermessungsgeräts 11 zu verbessern. Die dabei bewirkte Ziellinienmodifikation in Form eines statischen Beam-Alignment und/oder eines dynamischen Beam-Steering der vom Gerät 11 emittierter optischer Strahlung 10 kann also mit einer elektrischen Ansteuerung der Flüssiglinse bewirkt werden, ohne dass dabei mechanische Bewegungen und örtliche Verschiebungen von starren optischen Komponenten innerhalb des Geräts 11 durchgeführt werden.

**Fig. 8a** zeigt eine Flüssiglinse 30, mit welcher ein Strahlengang eines Entfernungsmessers gegenüber der Ziellinie eine Modifikation in Form einer Winkelablenkung erfährt. Im gezeigten Beispiel wird diese zur Vermessung einer Kante 41 eines Gebäudes als Zielobjekt 40 eingesetzt, indem die Entfernungsmessstrahlung in schneller Folge periodisch über die Kante 41 hin und her gescannt wird, um diese exakt zu erfassen. Die Kante 41 kann dabei in einem ersten Schritt z.B. mit Hilfe einer Bilderkennung im Sichtfeld des Geräts 11 erfolgen, worauf die oben beschriebene, detaillierte Vermessung der Kante 41 erfolgt. Die Kannte 41 kann dabei auch zusätzlich senkrecht zur Blattebene abgescannt werden, z.B. mit Hilfe eines Servo-Antriebs im Kippachsen-Goniometer 8 des Geräts 11. Dabei kann z.B. mittels Bildverarbeitung automatisch entlang der Kante verfahren werden während dem der Distanzmessstrahl laufend das Querprofil der Kante abscannt.

**Fig. 8b** zeigt ein Beispiel einer Modifikation des Strahlengangs mit der Flüssiglinse 30 in welcher ein horizontales 42 und/oder vertikales 43, pendelndes Abscannen mit einem optischen Strahl 10 eines Entfernungsmessers im Bereich der die Zielachse 9 im Beobachtungsbereich 49 des Geräts 11 erfolgt.

**Fig. 8c** zeigt ein Beispiel einer Modifikation des Strahlengangs 10 mit einem flächigen Abscannen eines Bereichs 44 in Richtung der Zielachse 9 im Gesichtsfeld 49 des Geräts 11 erfolgt. Dabei kann beispielsweise neben der Entfernung zu einer zu vermessenden Fläche als Zielobjekt, auch deren Neigung in Bezug auf die Zielachse 9 ermittelt werden.

**Fig. 8d** zeigt ein Beispiel einer Modifikation des Strahlengangs 10 mit einem kreisförmigen Abtasten 45 eines Bereichs rund um die eigentliche Zielachse 9. Bei entsprechendem Strahldurchmesser der Messstrahlung 10 auf dem Zielobjekt, welcher erfindungsgemäß ebenfalls modifiziert werden kann, kann dabei auch die Zielachse 9 umkreist werden (hier nicht gezeigt). Damit kann beispielsweise eine zu vermessende Ecke als Zielobjekt nicht nur durch Bildauswertung sondern auch durch die Entfernungsmessung charakterisiert werden, und diese Informationen können dazu genutzt werden, das Gerät 11 darauf auszurichten. Erfindungsgemäß kann auch nur der Entfernungsmessstrahl gegenüber der eigentlichen Zielachse 9 seitlich verschoben werden (immer noch kreisend, oder statisch) um dessen Entfernung genauer zu vermessen (und Speckles zu reduzieren), wobei dabei auch die jeweilige Winkelverschiebung der Zielachse 9 gegenüber dem Entfernungsmessstrahl bei der Auswertung Berücksichtigung finden kann.

**Fig. 8e** zeigt ein Beispiel einer Verschiebung der Zielrichtung des Messstrahls gegenüber der Zielachse 9. Eine solche kann entsprechend der vorliegenden Erfindung (z.B. wie weiter oben schon beschrieben) bewusst eingeführt werden. Es kann sich bei der Verschiebung aber auch um eine Korrektur eines unerwünschten Gerätefehlers handeln, welcher erfindungsgemäß mit einer statischen Ziellinienmodifikation korrigierbar ist.

Es kann mit der erfindungsgemäßen Flüssiglinse 30 eine statische Ziellinienmodifikation erfolgen. Also eine Ablenkung die über längere Zeitbereiche, also mehrere Minuten, Stunden oder länger, unverändert bleiben, oder welche sich in diesen Zeiträumen nur geringfügig - also um wenige Prozent verändern. Derartige statische Ziellinienmodifikationen werden beispielsweise im erfindungsgemäß ausgestatteten Vermessungsgerät 11 genutzt, um die Ziellinie 10 des Entfernungsmessers gegenüber der Zielachse 9 des Geräts 11 auszurichten und zu stabilisieren. Da die Modifikation erfindungsgemäß mit der Flüssiglinse 30 während des Betriebs des Geräts 11 möglich ist, können die Anforderungen an die Justage bei der Geräteherstellung und gegebenenfalls kann auch auf spezielle Maßnahmen im Gerätedesign zur Aufrechterhaltung dieser Justage bei Temperaturänderungen, Stößen, etc. verzichtet werden. Mit der erfindungsgemäßen Flüssiglinse 30, welche mittels mehrerer elektrischer Ansteuersignale derart konfigurierbar ist, dass deren optische Brechungseigenschaften in zumindest zwei oder drei (zumindest zwei transversalen und einer axialen) nichtzusammenfallenden Richtungen unterschiedlich variierbar sind, kann eine statische Ziellinienmodifikation zur Ziellinienstabilisierung durchgeführt werden, welche z.B. auch in einfacher Weise im Feld kalibierbar ist. Durch Mittel zur Visualisierung der Laserziellinie der Entfernungsmessung (z.B. sichtbares Messlicht, von einer geräteinternen Kamera erfassbares Messlicht, fluoreszierende Zielflächen, spezielle positionssensitive Sensoren für das Messlicht, etc.) kann eine derartige Kalibrierung - gegebenenfalls sogar automatisch - durchgeführt werden. Wenn die erfindungsgemäß eingesetzte Flüssiglinse 30 ihre optischen Eigenschaften mit hoher Reproduzierbarkeit verändern lässt, kann dabei auf eine ansonsten genutzte, geräteinterne Rückkopplung der aktuellen Ablenkung (z.B. durch einen dezidierten Sensor hierfür oder unter Ausnutzung eines geräteinternen Reflexes, insbesondere eines parasitären Reflexes) verzichtet werden. Hysterese-Effekte vielfach ohnehin recht gering, oder können zumeist einfach gehandhabt werden, indem das Anfahren der gewünschten Brechungseigenschaften immer von derselben Richtung oder gar von derselben Ausgangsstellung erfolgen kann.

Eine weitere Verbesserung der Instrumentengenauigkeit kann dabei Erfolgen, indem systematische Driften der Ziellinie in der Produktion (z.B. bei einer Schlussprüfung)vermessen werden. Beispielsweise wird dabei die Fehlzielung der Ziellinie in Funktion der Temperatur mittels als eine Spline parametrisiert oder tabellarisch abgelegt. Bei der Anwendung des Instruments wird dann zusammen mittels eines Temperatursensors die entsprechende Temperaturkorrektur an der Ziellinie angebracht. Dabei kann zur Kompensation von Driften der Flüssiglinse 30 der Temperatursensor nahe bei der Flüssiglinse 30 angebracht sein.

Die statische Ziellinienmodifikation mit der Flüssiglinse 30 kann dabei wie beschrieben zum Ausgleich von Instrumentenfehlern, Fehljustagen, etc. genutzt werden. Es kann aber auch bewusst eine Verschiebung der Ziellinie 10 eingeführt werden. Beispielsweise kann die Geräte-Zielachse 9 lediglich grob auf das Zielobjekt ausgerichtet werden, dessen exakte Winkelposition innerhalb des Sichtfelds des Geräts 11 automatisch erkannt (Bilderkennung, automatische Erfassung von Reflektoren, etc.) bzw. durch den Benutzer, etwa auf einem Bildschirm festgelegt werden. Der Messstrahl der Distanzmessung kann dann mit der Flüssiglinse 30 in diese Richtung abgelenkt werden, um den Zielpunkt exakt zu vermessen, ohne dass die Geräte-Zielachse 9 dabei exakt auf diesen Zielpunkt ausgerichtet ist. Es erfolgt also ähnlich der Spurhaltung in einem Laufwerk für optische Datenträger eine Grobpositionierung mit einem Servomotor (oder bei Vermessungsgeräten gegebenenfalls auch von Hand) kombiniert mit einer Feinausrichtung der eigentlichen Messung durch die Optik, in der vorliegenden Erfindung speziell durch die erfindungsgemäße Flüssiglinse.

**Fig. 8e** zeigt speziell ein Sichtfeld 49 des Geräts 11, mit dessen Zielachse 9. Im Sichtfeld 49 ist der Auftreffpunkt der Laserstrahlung 10 des Entfernungsmessers des Vermessungsgeräts 11, welcher wie zuvor beschrieben mit der Flüssiglinse verschoben werden kann, was durch das Pfeilkreuz 46 symbolisiert ist. Die Flüssiglinse kann also eine statische Stabilisierung - also ein in Übereinstimmung bringen des Punktes 10 mit der Zielachse 9 - oder ein kontrolliertes Ablenken von dieser Ausrichtung erfolgen.

**Fig. 8f** zeigt ein Beispiel einer Vermessung bei welcher ein nicht koinzidieren der Zielachse 9 gegenüber der Richtung der Entfernungsmessung genutzt wird. Das Zielobjekt 40 ist die Ecke eines Gebäudes, welche mit der durch das Fadenkreuz repräsentierten Zielachse 9 zur Winkelvermessung angepeilt wird. Um die Distanzmessung durchzuführen, würde bei einer konzentrischen Distanzmessung ein nicht unerheblicher Anteil der Messstrahlung neben der Kante verloren gehen bzw. ein anderes Ziel als das zu Vermessende treffen und zu Mehrdeutigkeiten führen. Durch das gezeigte Verschieben des Zielpunktes der Distanzmessung in den Quadranten des Zielobjekts 40 links unten, kann die gesamte Messstrahlung auf das Zielobjekt gerichtet und zur Vermessung genutzt werden. In einer Fortbildung kann dabei eine Überlagerung der zuvor beschriebenen scannenden Bewegung dahingehende genutzt werden, eine Neigung der gemessenen Fläche gegenüber der optischen Achse zu bestimmen und damit etwaige Messfehler durch den verschobenen Messpunkt mittels dieser Neigung mathematisch zu kompensieren. Auch kann eine Vermessung einer Kante oder Stufen durch anzielen einer Ecke mit dem Fadenkreuz der Zielachse 9 und mehrere Distanzmessungen in den vier Quadranten rund um das Fadenkreuz erfolgen.

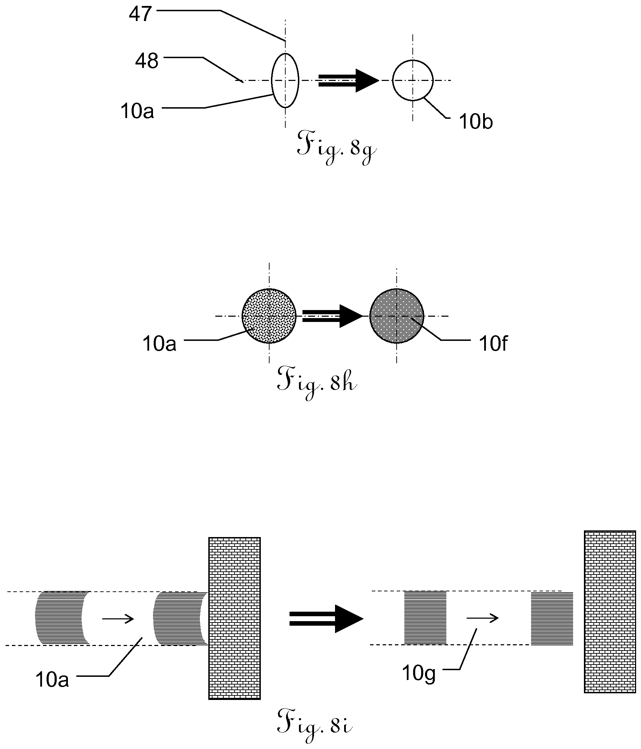

**Fig. 8g** zeigt ein Beispiel eines erfindungsgemäßen Ausgleichs von unterschiedlichen Divergenzwinkeln eines von einer Halbleiterlichtquelle emittierten Laserstrahls (als ein elliptisches Strahlenbündel), welcher als optische Strahlung zu Vermessungszwecken in einem erfindungsgemäßen Vermessungsgerät 11 eingesetzt wird. Mit der erfindungsgemäß im Vermessungsgerät eingesetzten Flüssiglinse kann eine Strahlmodifikation erfolgen, um achsabhängig die Strahldivergenz zum modifizieren bzw. auszugleichen.

Die Flüssiglinse hat dazu eine im Wellenlängenbereich des optischen Signals transparenten Flüssigkeit mit zumindest einer Grenzfläche hin zu einem Medium mit einem von der Flüssigkeit abweichenden optischen Brechungsindex. Das benachbarte Medium kann z.B. wiederum eine Flüssigkeit oder aber auch Luft sein. Die Grenzfläche kann mittels mehrerer elektrischer Ansteuersignale derart verformbar ist, dass dadurch die optischen Brechungseigenschaften des Elements in zumindest zwei nicht zusammenfallenden Richtungen unterschiedlich variierbar sind. Somit kann beispielsweise über den gesamten Messbereich des Vermessungsgeräts eine Einstellung der Größe des Messstrahlungsauftreffpunkt erzielt werden, wobei die Form des Auftreffpunktes, also der Messlichtfleck in seiner Form z.B. als Kreis, Ellipsoid, etc. entsprechend einer Vorgabe justiert werden kann. Soll z.B. die Strahlformung am Auftreffpunkt astigmatismusfrei abgebildet oder projiziert sein, so werden vorzugsweise zumindest zwei Flüssiglinsen hintereinander eingesetzt, wodurch in mehrere Richtungen die Vergrösserung zoomartig eingestellt werden kann.

**Fig. 8h** zeigt ein Beispiel eines erfindungsgemäßen Ausgleichs von Speckles bei eine ATR oder Messstrahl bzw. einer Anpassung der Modulationswellenfront der vom Gerät 11 emittierter optischer Strahlung. Es kann die Flüssiglinse zu einer z.B. zyklischen Variation ihrer Brechungseigenschaften angesteuert werden, welche zu einem Verwischen von Speckle-Effekten führt. Diese Variation kann hierfür in ihrer Amplitude recht gering sein, erfolgt aber insbesondere mit großer Frequenz, insbesondere mit Amplitude, welche hinreichend zur Verwischung der Speckles und einer Frequenz welche hinreichend schnell ist um eine Mittelung von Speckles während einer Messung oder über mehrere Messungen, welche zur Messwertbildung gemittelt werden, hinweg gemessen werden.

**Fig. 8i** zeigt eine Anpassung der Modulationswellenfront der Intensität der emittierten Strahlung als weiteres Beispiel einer Ziellinienmodifikation entsprechend der vorliegenden Erfindung. Optoelektronische Vorrichtungen wie Entfernungsmesser, ATR oder Zielsucheinheit arbeiten mit zeitlich modulierten Sendestrahlen. Die Messgenauigkeit einer solchen Messvorrichtung wird unter anderem von der Ebenheit oder Uniformität der Modulationswellenfront der verwendeten Strahlung 10 beeinflusst. Dabei kann die Flüssiglinse 30 zur Anpassung der Modulationswellenfront der emittierten Messstrahlung dienen. Dabei können insbesondere mehrsegmentige Ansteuerungen der Flüssiglinse genutzt werden, um durch entsprechende Verformungen der Grenzfläche der Flüssigkeit eine glatte Modulationswellenfront der emittierten optischen Strahlung am Zielobjekt zu erzielen, bzw. die Modulationswellenfront in eine andere gewünschte, beispielsweise ebene Form zu bringen. Neben einer statischen Glättung der Modulationswellenfront kann auch eine dynamische Glättung derselben erfolgen, wobei die Verbesserung der Messgenauigkeit aufgrund einer zeitlichen Mittelung erfolgt. Speziell bei der ATR stört das Vorhandensein von Speckles die Richtungsmessung. Durch eine dynamische Ansteuerung der Flüssiglinse kann eine zeitliche Mittelung der Speckles erzielt werden, und somit die Winkelgenauigkeit der ATR-Messgenauigkeit erheblich verbessert werden.

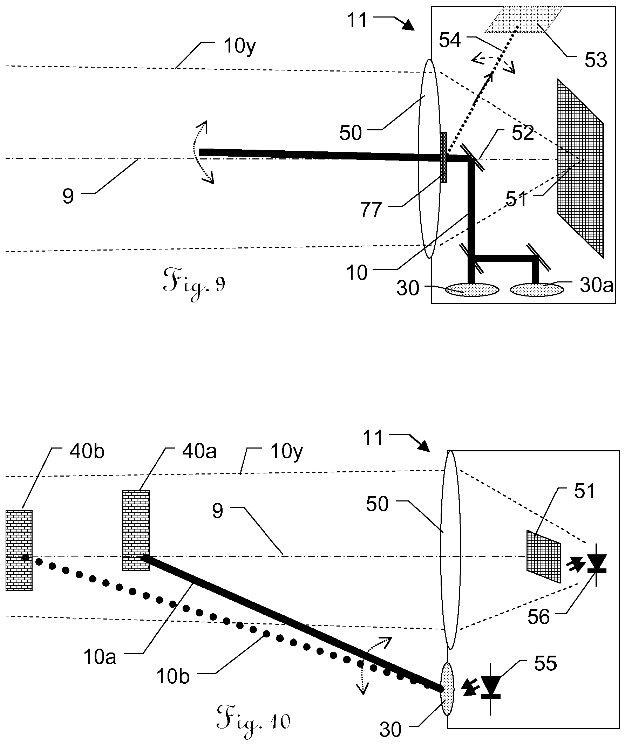

Eine beispielhafte Darstellung eines erfindungsgemäßen Vermessungsgeräts 11 mit einer Flüssiglinse 30 ist in **Fig. 9** in einer vereinfachten, schematischen Darstellung von einigen, teils auch optionalen Gerätekomponenten. Dabei wird die vom Gerät 11 emittierte, optische Strahlung 10 durch koaxiales Einspiegeln der Strahlung 10 mit dem Empfangsstrahlengang der Empfangslinse 50 mit einer Zielachse 9 einer Beobachtung des Zielobjekts 40 zur Winkelmessung emittiert. Ein vom Zielobjekt zurückgeworfener Anteil der emittierten Strahlung wird von der Eingangsoptik 50 erfasst und auf ein hier nicht dargestelltes Empfangselement des optoelektronischen Entfernungsmesser gleitet. Die Ziellinienmodifikation der optischen Strahlung 10 erfolgt dabei durch die geräteinterne Flüssiglinse 30, hier angedeutet durch die Bogenpfeile. Es kann jedoch mittels der Flüssiglinse neben einer Ziellinienverschiebung auch eine andere der hier beschriebenen Ziellinienmodifikationen oder insbesondere eine Kombination dieser durchgeführt werden. In der Darstellung ist auch ein Flächenbildsensor 51 (z.B. eine CCD- oder CMOS-Kamera) gezeigt, mit welchem das Zielobjekt visualisiert werden kann. Optional kann ein dem Flächenbildsensor zugeordneter Zielbeleuchter ebenfalls mit einer Flüssiglinse 30a bestückt sein, eine typische Ziellinienmodifikation ist dabei z.B. eine distanzabhängige Divergenzeinstellung. Weiter kann ein Durchsichtkanal, ein Zielbeleuchter, ein optisch-positionssensitives Element zur Zielerfassung, automatischen Anzielung und/oder Zielverfolgung ein Referenzpfad für die Distanzmessung, zusätzliche Bilderfassungselemente, und verschiedenste optische Elemente wie Linsen, Umlenkspiegel, Prismen, Wellenlängenfilter, Polarisatoren, etc. vorhanden sein, welche hier der Übersichtlichkeit halber nicht dargestellt sind.

Hingegen ist ein Beispiel einer optionalen, geräteinternen Erfassung der aktuellen Strahlmodifikation der ausgesendeten optischen Strahlung schattiert dargestellt. Das gezeigte Beispiel nutzt einen parasitären internen Reflex 54 der zu emittierenden Strahlung im Inneren des Geräts 11, welcher von einem photosensitiven Element 53 empfangen, bzw. darauf abgelenkt wird. Das photosensitive Element 53 kann z.B. ein PSD, eine oder mehrere Photodioden oder ein CCD- oder CMOS-Array sein. Alternativ kann neben dem zuvor beschriebenen parasitären Reflex auch eine speziell für diesen Zweck eingebaute Abzweigung eines Anteils der Strahlung genutzt werden. Beispielsweise kann mittels eines Hologramms 77 ein Bruchteil der Strahlung reflektiert und unter einen bestimmten Winkel derart abgelenkt werden, dass dieser dem positionssensitiven Element zugeführt wird.

**Fig. 10** zeigt einen Spezialfall, bei welchem die Aussendung von optischer Entfernungsmessstrahlung biaxial zur Zielachsrichtung 9 des Geräts 11 erfolgt. Es ist also die optische Achsen des Sendestrahlengangs der Entfernungsmessung 10a, 10b klar vom Empfangsstrahlengang der Objektivlinse 50 mit der Zielachse 9 abweicht, z.B. indem - wie gezeigt - hierfür jeweils dezidierte, nebeneinander angeordnete Optiken verwendet werden. Alternativ zur gezeigten Ausführung kann auch der Empfangsstrahlengang mit Flüssiglinse 30 und der Sendestrahlengang ohne Flüssiglinse 30 ausgestattet sein, wobei in diesem speziellen Fall sich die Zielachse alternativ über den Sendestrahlengang definieren ließe, womit die Bedeutung der Begriffe Ziellinie und Zielachse gegenüber deren Gebrauch in dieser Beschreibung vertauscht anzuwenden wäre. Mit der erfindungsgemäß im Vermessungsgerät 11 eingesetzten Flüssiglinse 30 mit einer optisch transparenten Flüssigkeit, die zumindest eine Grenzfläche hin zu einem Medium mit einem von der Flüssigkeit abweichenden optischen Brechungsindex aufweist, welche mittels mehrerer elektrischer Ansteuersignale derart verformbar ist, dass dadurch die optischen Brechungseigenschaften der Flüssiglinse 30 in zumindest zwei nicht zusammenfallenden Richtungen unterschiedlich variierbar sind, kann auch bei einem derartigen, nicht koaxialen System ein Auftreffpunkt der Messstrahlung auf dem Zielobjekt 40 eingestellt werden, welcher entfernungsunabhängig auf der Achse der Zielrichtung zu liegen kommt. Es wird als bei einem nahen Zielobjekt 40 wie auch bei einen ferneren Zielobjekt 40b stets in Zielachsrichtung 9 gemessen, was durch eine Ziellinienmodifikation mit der Flüssiglinse 30 im Vermessungsgerät 11 erzielbar ist, indem die Richtung der optischen Achse des Aussendens z.B. von 10a nach 10b variiert wird. Somit liegt der Auftreffpunkt der von der Entfernungsmesslichtquelle 55 emittierten Strahlung immer auf der Gerätezielachse 9 und die durch Auswertung des Entfernungsmesslichtempfängers 56 ermittelte Distanz wird trotz biaxialer Anordnung des Senders immer zu einem Punkt bestimmt, welcher auf der Zielachse 9 liegt. Als weitere Ziellinienmodifikation kann z.B. zudem die Kollimation der Messstrahlung angepasst werden, um bei unterschiedlichen Zieldistanzen jeweils einen gewünschten Lichtfleck auf dem Zielobjekt zu erzielen. Auch das in diesem Dokument beschriebene, kontrollierte statische oder dynamische ablenken des Entfernungsmesspunktes von der Zielachse 9 kann als ein weiteres Beispiel einer Ziellinienmodifikation zusätzlich angewandt werden.

Gegebenfalls kann bei der Entfernungsbestimmung auch die durch die Flüssiglinse 30 verursachte Winkelablenkung, berücksichtigt werden, welche speziell bei nahen Zielen durch die Dreiecksbildung die Entfernungsmessergebnisse verfälschen würde. Der Aufreffpunkt der Messstrahlung kann beispielsweise von einem lichtpositionssensitiven Element 51, (z.B. einer Kamera, bestimmt) und anhand dessen die Ablenkung durch die Flüssiglinse 30 angepasst werden. Durch die Flüssiglinse 30 in einem erfindungsgemäßen Vermessungsgerät 11 können auch Probleme einer Nachbereichsabschattung überwunden werden.

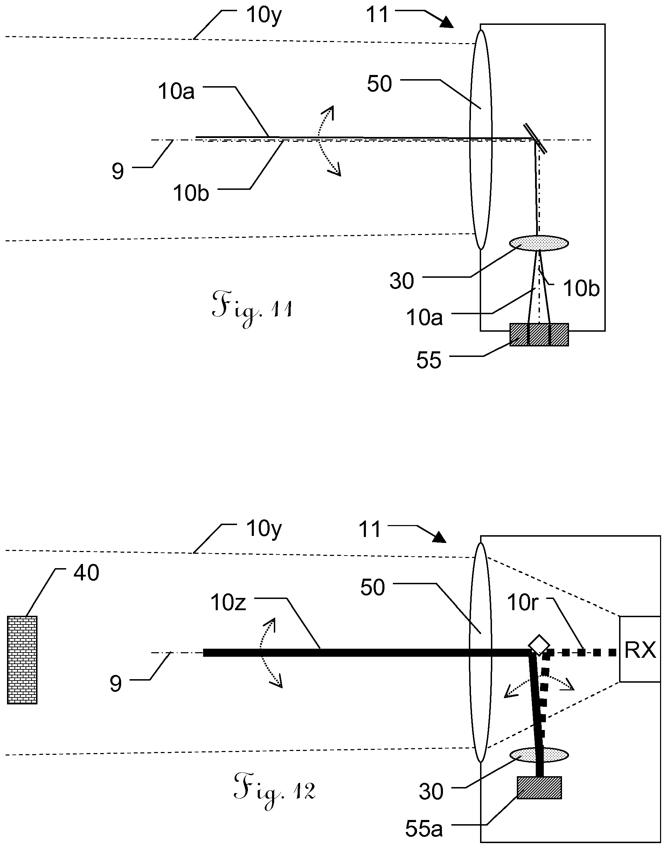

**Fig. 11** zeigt eine beispielhafte Ziellinienmodifikation, bei welcher mit der Flüssiglinse 30 optische Entfernungsmessstrahlung der Lichtquelle 55a des Entfernungsmessers variiert wird. Bei der Lichtquelle 55a handelt es sich um ein Laserdiodenbauelement, welches unterschiedliche Wellenlängen 10a und 10b, z.B. Infrarot und/oder sichtbares Rot, emittieren kann. Derartige Bauelemente sind am Markt verfügbar, jedoch wird die Strahlung der beiden Wellenlängen an unterschiedlichen Stellen emittiert und/oder die Strahlenbündel weisen unterschiedliche Divergenzen auf, welche zudem meist noch Exemplarstreuungen unterworfen sind. Mit der Ziellinienmodifikation durch die Flüssiglinse 30 entsprechend der vorliegenden Erfindung kann ein derartiges Bauelement in einem Vermessungsgerät eingesetzt werden, da hierdurch eventuelle abweichende Abstrahlparameter der Laserlichtquelle 55a aber auch chromatische Aberrationen der Sendeoptik mittels der Flüssiglinse korrigiert werden können und eine Ausrichtung der Laserziellinie auf die Anzielachse ausführbar ist (bzw. wie beschrieben bewusst davon abweichend). Somit können z.B. Messungen auf Retroreflektoren mit unsichtbarer IR-Strahlung und reflektorlose Messungen mit einem sichtbaren Messpunkt durchgeführt werden, und Ziellinie 10 und Zielachse 9 aufeinander justiert werden. Eine allfällige Kalibrierung dieser kann automatisch und auch im Feld erfolgen, ohne dass mechanische Eingriffe durch den Benutzer erforderlich sind. Ein bekanntes Phänomen bei Laserdioden ist der thermische Drift deren Emissionswellenlänge. Bei Verwendung einer einfachen und kostengünstigen Kollimationsoptik mit chromatischer Längsaberration kann mittels einer Flüssiglinse und einer Temperaturmessung an der Laserdiode die Lambda-Viertel Bedingung eingehalten werden, sodass auch bei thermischer Drift deren Emissionswellenlänge die Laserpunktschärfe auf dem Zielobjekt 40 erhalten bleibt.

**Fig. 12** zeigt eine beispielhafte Ziellinienmodifikation, bei welcher mit der Flüssiglinse 30 Entfernungsmessstrahlung der Lichtquelle 55a eines Entfernungsmessers entweder in Form von vom Gerät 11 emittierter Strahlung 10z in Richtung Zielobjekt 40 gesandt wird oder in Form von Referenzstrahlung 10r geräteintern über eine Referenzstrecke bekannter Länge direkt auf einen Empfänger RX für die Entfernungsmessstrahlung geleitet wird. Optional zu dieser Funktion kann mit der Flüssiglinse 30 auch eine Ausrichtung der Ziellinie 10z des Entfernungsmessers gegenüber der Zielachse 9 des Geräts 11 variiert werden und/oder eine Strahldivergenz der emittierten Strahlung 10z variiert werden. Auch andere der in diesem Dokument beschriebenen Ziellinienmodifikationen durch die Flüssiglinse 30 sind anwendbar.

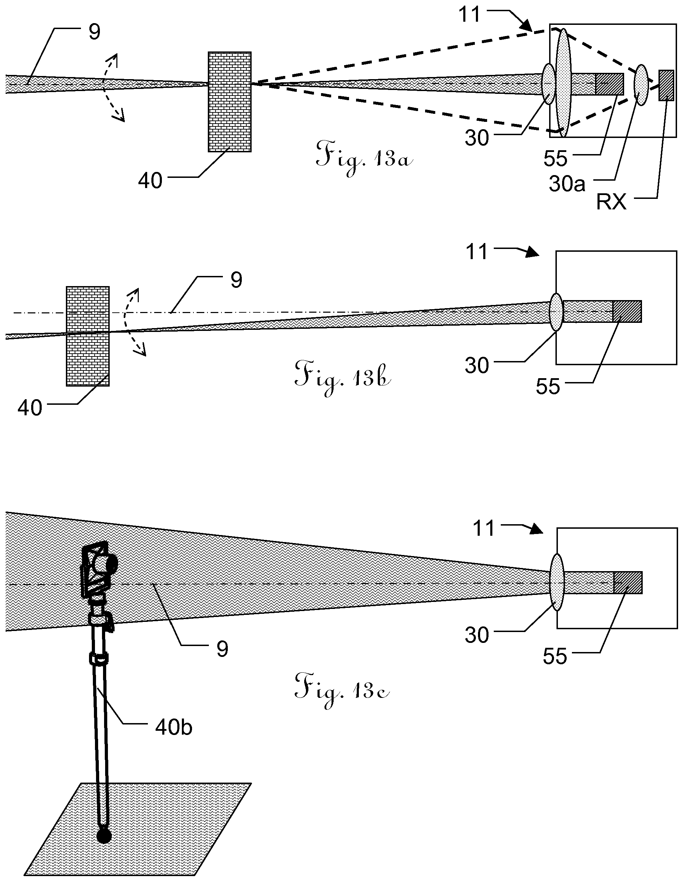

**Fig. 13a** zeigt stark vereinfacht ein Vermessungsgerät 11 mit dem Sendestrahlengang des darin verbauten Entfernungsmessers. Eine Laserquelle 55 emittiert amplitudenmodulierte, optische Strahlung zur Entfernungsmessung, welche erfindungsgemäß durch die Flüssiglinse 30 modifiziert wird. Um eine punktgenaue Messung zu erzielen und auch um eine gute Sichtbarkeit des Messpunktes am Zielobjekt 40 sicherzustellen, wird die Entfernungsmessstrahlung derart modifiziert, dass deren Strahltaille zumindest annähernd auf dem Zielobjekt 40 zu liegen kommt. Um dieses einzustellen, kann z.B. das Ergebnis einer ersten Entfernungsmessung herangezogen werden.

Auch kann vor dem Empfänger RX eine Flüssiglinse 30a platziert sein. Insbesondere bei kurzen Messdistanzen kann mit der Flüssiglinse 30a ein Umgehen von Nahbereichsabschattungen durch anpassen der Geometrie des Entfernungsmessstrahlenganges bewirkt werden. Es kann dabei mittels der Flüssiglinse 30a zumindest annähernd bei allen Distanzen das Objekt 40 auf den Empfänger RX abgebildet werden.

**Fig. 13b** zeigt den Sachverhalt von Fig. 13a bei der Vermessung eines weiter entfernten Zielobjekts 40, wobei zudem eine Abweichung der Ziellinie 10z des Entfernungsmessers von der Zielachse 9 des Geräts 11 sichtbar ist. Mit der Flüssiglinse 30 wird in diesem Beispiel das Messlicht wiederum im Bereich des Zielobjekts 40 fokussiert und/oder es wird der Versatz der beiden Zielrichtungen ausgeglichen, bzw. ein allenfalls gewünschter Versatz eingeführt, oder eine dynamische Scannbewegung eingeführt, Strahldivergenzanpassungen, Speckel-Reduzierungen, Wellenfrontanpassungen, etc. vorgenommen - kurzum eine Kombination einer Auswahl der in diesem Dokument beschriebenen Ziellinienmodifikationen, wobei sich die konkrete Auswahl aus den Messanforderungen ergibt.

**Fig. 13c** zeigt das erfindungsgemäße Vermessungsgerät aus den vorherigen beiden Figuren bei einer Vermessung eines gut reflektierenden, kooperativen Ziels, wie dem gezeigten Retroreflektor auf dem Lotstock 40b als Zielobjekt. Da das Zielobjekt gut reflektiert, kann hierbei mit der Flüssiglinse die Messstrahlung deutlich divergenter abgestrahlt werden, ohne dass dadurch die Entfernungsmessgenauigkeit durch zu niedrige Signalintensität verschlechtert wird. Dieser breite, stark divergente Messstrahl 10z kann z.B. auch zur automatischen Erkennung des Ziels im Gesichtsfeld einer ATR des Geräts 11 genutzt werden, mit welcher auch die Winkelposition des Zielobjekts 40 automatisch bestimmt werden kann. Um die bei der präzisen Zielfindung sich störend auswirkenden Speckle-Effekte zu reduzieren, kann dabei zusätzlich eine der hierzu oben bereits beschriebenen Methoden angewandt werden. In einer Ausführungsform kann dabei beispielsweise die Divergenz der Messstrahlen 10z in Abhängigkeit der Messdistanz eingestellt werden, wobei der Divergenzwinkel mit zunehmender Messdistanz verringert wird. Somit nimmt mit zunehmender Distanz die Bestrahlungsstärke am Lotstock oder an der Messlatte nur geringfügig ab, wodurch das Empfangssignal der Messvorrichtungen ausreichend stark bleibt und die Messgenauigkeit verbessert wird.

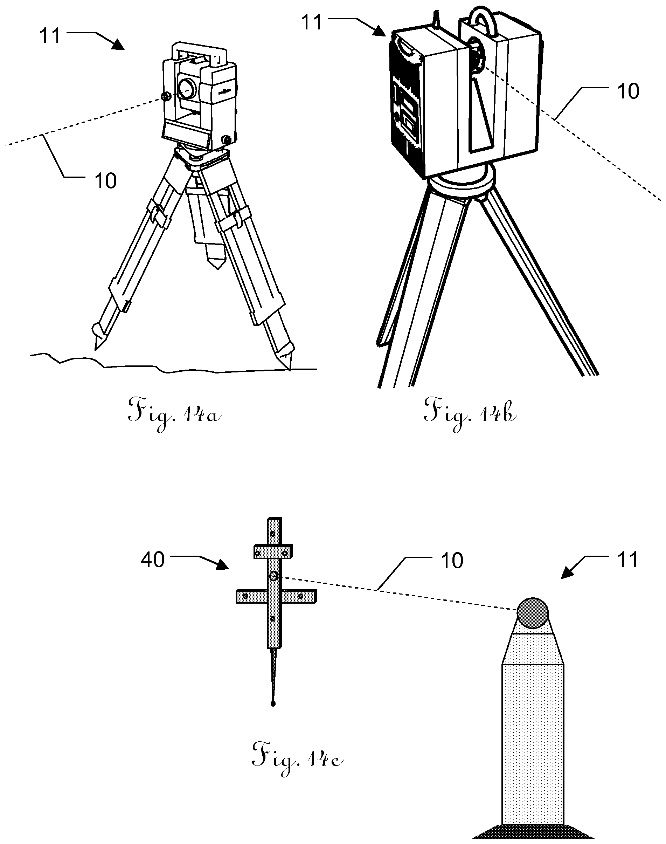

**Fig. 14a, Fig. 14b und Fig. 14c** zeigen beispielhaft einige weitere Ausführungsformen von Vermessungsgeräten, die erfindungsgemäß mit einer Flüssiglinse ausgestattet sind, sodass mit dieser die oben beschriebenen Ziellinienmodifikationen durchführbar sind. Konkret handelt es sich um Vermessungsgeräte, welche mit einer um zwei Achsen beweglichen Ziellinie eines optoelektischen Entfernungsmessers Polarkoordinaten von Zielpunkten auf Zielobjekten bestimmen. Speziell gezeigt sind ein Tachymeter bzw. eine Totalstation in **Fig. 14a**, ein Laserscanner in **Fig. 14b** und ein Lasertracker in **Fig. 14c****.**

Dem Fachmann ist offensichtlich, dass die hier gezeigten Strahlengänge prinzipieller Natur sind und bei praktischen Realisierungen entsprechend zusätzliche optische Komponenten und geometrische Bedingungen zwischen diesen erforderlich sein können, um die beschriebenen Funktionalitäten beim Design eines Geräts 11 zu erzielen.

Erfindungsgemäß ist also das optische Element 30 im Vermessungsgerät 11 derart ausgebildet und angeordnet, dass mit diesem beispielsweise eine Ziellinienmodifikation in Form eines
▪ Ausrichtens einer Ziellinie gegenüber der Zielachse 9 des Vermessungsgeräts 11,
▪ Variierens einer Divergenz der ausgesendeter Strahlung, insbesondere eines richtungsabhängigen Variierens,
▪ Reduzierens von Speckle-Effekten durch eine dynamische Variation der Brechungseigenschaften,
▪ Glättens einer Modulationswellenfront,
▪ Ausführens von dynamischen Scannbewegungen des ersten Strahlengangs 10z,
▪ Umschaltens zwischen einem Referenzstrahlengang oder einem Messstrahlengang,
▪ Ausrichtens von zumindest Strahlengängen von zwei unterschiedlichen optischen Strahlungsquellen gegeneinander und/oder
▪ Verfolgens des Zielobjekts 40 mit dem ersten und/oder zweiten Strahlengang
für sich oder in Kombination miteinander durchführbar.

## Patentansprüche

1. Optisches Vermessungsgerät (11),
insbesondere ein Tachymeter, Laserscanner oder Lasertracker, mit
einer Basis (1) zur Aufstellung des
Vermessungsgeräts (11) und
einer gegenüber der Basis (1) um zwei mit jeweils mit Winkelmessern versehenen Achsen (7,8) drehbaren Anzieleinheit (3), welche Anzieleinheit (3) eine Zielachse (9) zur Anzielung eines zu vermessenden Zielobjekts (40) definiert,
wobei die Anzieleinheit (3)
▪ einen ersten Strahlengang (10z) zum Aussenden optischer Strahlung (10), insbesondere von einer Laserlichtquelle, in Richtung des zu vermessenden Zielobjekts (40), und
▪ einen zweiten Strahlengang (10y) zum Empfang eines vom Zielobjekt (40) zurückgeworfenen Anteils der optischen Strahlung (10) durch ein optoelektronisches Empfangselement (58,13,51),
aufweist, wobei zumindest einer der Strahlengänge (10z, 10y) ein optisches Element (30) aufweist, welches wenigstens mit einem optisch transparenten, verformbaren Volumenkörper (63), insbesondere einer Flüssigkeit, ausgebildet ist, welcher zumindest eine Grenzfläche (63g) hin zu einem Medium mit einem von dem Volumenkörper (63) abweichenden optischen Brechungsindex aufweist, **dadurch gekennzeichnet, dass** die Grenzfläche (63g) mittels mehrerer elektrischer Ansteuersignale (31a,31b,31c,31d) derart verformbar ist,
dass dadurch die optischen Brechungseigenschaften des Elements in zumindest zwei nichtzusammenfallenden Richtungen (31a,31b,31c,31d) unterschiedlich variierbar sind, insbesondere wobei die
Richtungen (31a,31b,31c,31d) zumindest annähernd orthogonal zu einer optischen Achse des optischen Elements (30) liegen, insbesondere wobei das optische Element (30) eine Flüssiglinse ist.

2. Vermessungsgerät (11) nach Anspruch 1, **dadurch gekennzeichnet, dass**
das optische Element (30) entlang des Umfangs des Volumenkörpers (63) mehrere von den elektrischen Ansteuersignalen (31a,31b,31c,31d) angesteuerte Stellglieder aufweist, insbesondere zumindest vier, vorzugsweise acht oder mehr.

3. Vermessungsgerät (11) nach Anspruch 1 oder 2, **dadurch gekennzeichnet, dass**
das optische Element (30) derart ausgebildet ist, dass dessen optische Brechungseigenschaften derart variierbar sind, dass durch die elektrischen Ansteuersignale (31a,31b,31c,31d) eine Variation einer Ablenkung der optischen Achse des betreffenden Strahlengangs durchführbar ist,
insbesondere wobei mit der Variation der Ablenkung das optische Signal zwischen einem Referenzpfad und einem Messpfad umschaltbar ist.

4. Vermessungsgerät (11) nach einem der Ansprüche 1 bis 3, **dadurch gekennzeichnet, dass**
das optische Element (30) derart ausgebildet ist, dass dessen optische Brechungseigenschaften derart variierbar sind, dass durch die elektrischen Ansteuersignale (31a,31b,31c,31d) eine Variation einer axialen Fokussierung des betreffenden Strahlengangs durchführbar ist,
insbesondere wobei die Fokussierung zwischen divergent und konvergent variierbar ist.

5. Vermessungsgerät (11) nach einem der Ansprüche 1 bis 4, **dadurch gekennzeichnet, dass**
das Vermessungsgerät (11) einen optoelektronischen Entfernungsmesser aufweist und der das optische Element (30) aufweisende Strahlengang (10z, 10y) eine optische Strahlung des Entfernungsmessers führt und/oder, dass
das Vermessungsgerät (11) eine automatische Zielerfassung aufweist und der das optische Element (30) aufweisende Strahlengang (10z, 10y) eine optische Strahlung der Zielerfassung führt.

6. Vermessungsgerät (11) nach einem der Ansprüche 1 bis 5,' **dadurch gekennzeichnet, dass**
das optische Element (30) im ersten Strahlengang (10z) angeordnet ist und mit der Variation der optischen Brechungseigenschaften eine statische und/oder dynamische Ziellinienmodifikation durchführbar ist, insbesondere wobei mit der statischen Ziellinienmodifikation die Zielachse(9) in ihrer Ausrichtung kalibrierbar ist.

7. Vermessungsgerät (11) nach einem der Ansprüche 1 bis 6, **dadurch gekennzeichnet, dass**
das Vermessungsgerät (11) ein optisches
Sensorelement (51,53) für eine Erfassung eines Auftreffpunkts der optischen Strahlung (10) auf dem Zielobjekt (40) aufweist und
durch eine Auswertung des Sensorelements (51,53) eine Regelung der Ansteuersignale (31a,31b,31c,31d) derart erfolgt, dass eine Form und/oder eine Lage des Auftreffpunkts gegenüber der Zielachse (9) einem Sollwert entspricht.

8. Vermessungsgerät (11) nach einem der Ansprüche 1 bis 7, **dadurch gekennzeichnet, dass**
das optische Element (30) derart ausgebildet und angeordnet ist, dass mit diesem eine Ziellinienmodifikation in Form eines
▪ Ausrichtens einer Ziellinie gegenüber der Zielachse (9) des Vermessungsgeräts (11),
▪ Variierens einer Divergenz der ausgesendeten Strahlung, insbesondere eines richtungsabhängigen Variierens,
▪ Reduzierens von Speckle-Effekten durch eine dynamische Variation der Brechungseigenschaften,
▪ Glättens einer Modulationswellenfront,
▪ Ausführens von dynamischen Scannbewegungen des ersten Strahlengangs (10z),
▪ Umschaltens zwischen einem Referenzstrahlengang und einem Messstrahlengang,
▪ Ausrichtens von zumindest Strahlengängen von zwei unterschiedlichen optischen Strahlungsquellen gegeneinander und/oder
▪ Verfolgens des Zielobjekts (40) mit dem ersten und/oder zweiten Strahlengang
durchführbar ist.

9. Verfahren zur Vermessung eines Zielobjekts (40) mit einem optischen Vermessungsgerät (11), insbesondere ein Tachymeter, Laserscanner oder Lasertracker, mit
• einer Aufstellung einer Basis (1) des Geräts (11),
• einem Anzielen des Zielobjekts (40) mit einer Zielachse (9) einer Anzieleinheit (3) durch ein Drehen der Anzieleinheit (3) um zwei mit Winkelmessern versehenen Achsen (7,8) gegenüber der Basis (1),
wobei das Anzielen mit
• einem Aussenden von optischer Strahlung (10) entlang eines ersten Strahlengangs (10z) in Richtung des Zielobjekts (40), und
• einem Empfangen eines vom Zielobjekt (40) entlang eines zweiten Strahlengangs (10y) zurückgeworfenen Anteils der optischen Strahlung (10) durch ein optoelektronisches Empfangselement,
erfolgt,
**gekennzeichnet, durch**
ein Modifizieren des ersten und/oder zweiten Strahlengangs mit einem Variieren von optischen Brechungseigenschaften eines, sich in zumindest einem der Strahlengänge (10z, 10y) befindenden optischen Elements (30)
in zumindest zwei nichtzusammenfallenden Richtungen (31a,31b,31c,31d),
welches durch ein unterschiedliches Verformen einer Grenzfläche (63g) eines optisch transparenten verformbaren Volumenkörpers (63), insbesondere einer Flüssigkeit, hin zu einem Medium mit einem von dem Volumenkörper (63) abweichenden optischen Brechungsindex in den Richtungen (31a,31b,31c,31d) erfolgt, und
mittels mehrerer elektrischer Ansteuersignale (31a,31b,31c,31d) gesteuert wird.

10. Verfahren nach Anspruch 9, **dadurch gekennzeichnet, dass** das Modifizieren als statische Ziellinienmodifikation mit einer Strahlbündelformung von unterschiedlichen Divergenzwinkeln der ausgesendeten optischen Strahlung erfolgt.

11. Verfahren nach einem der Ansprüche 9 oder 10, **dadurch gekennzeichnet, dass**
das Aussenden der optischen Strahlung (10) mit zumindest zwei Wellenlängen, insbesondere einer sichtbaren und einer unsichtbaren Wellenlänge, erfolgt, speziell mit einer Laserlichtquelle mit welcher von einem einzigen Bauteil die zwei Wellenlängen emittierbar sind, und
das Modifizieren als statische Ziellinienmodifikation die optische Strahlung (10) der ersten und/oder zweiten Wellenlänge gegenüber der Zielachse (9) ausrichtet.

12. Verfahren nach einem der Ansprüche 9 bis 11, **dadurch gekennzeichnet, dass**
das Modifizieren als statische Ziellinienmodifikation derart erfolgt, dass eine distanzangepasste Fokussierung des das optische Element (30) enthaltenden Strahlengangs (10z, 10y) erfolgt,
insbesondere mit einer ersten Strahldivergenz für ein nichtkooperatives Zielobjekt (40), welche geringer ist als eine zweite Strahldivergenz für ein kooperatives Zielobjekt (40).

13. Verfahren nach einem der Ansprüche 9 bis 12, **dadurch gekennzeichnet, dass**
das Modifizieren als statische Ziellinienmodifikation derart erfolgt, dass eine Anpassung der Fokussierung des das optische Element (30) enthaltenden Strahlengangs (10z, 10y) erfolgt, sodass eine Bestrahlungsstärke des optoelektronischen Empfangselements zumindest annähernd konstant gehalten wird.

14. Verfahren nach einem der Ansprüche 9 bis 13, **dadurch gekennzeichnet, dass**
das Modifizieren als dynamische Ziellinienmodifikation mit einem dynamischen Variieren der Brechungseigenschaften erfolgt, so dass eine Reduktion von Speckle-Effekten der optischen Strahlung und/oder eine Glättung einer Modulationswellenfront der optischen Strahlung erfolgt, insbesondere mit einer periodischen Variation der Brechungseigenschaften und/oder, dass
das Modifizieren als dynamische Ziellinienmodifikation mit einer Scann-Bewegung des Strahlengangs (10z, 10y) in einem Bereich um eine Soll-Zielrichtung zum Zielobjekt (40) erfolgt,
insbesondere mit einem Ermitteln einer Kante des Zielobjekts (40) oder einer Neigung einer Fläche des Zielobjekts (40) in Bezug auf die Soll-Zielrichtung durch Vermessung mehrerer Punkte innerhalb der Scann-Bewegung, oder
das Modifizieren als dynamische Ziellinienmodifikation synchron zu einer Bewegung von zumindest einer der Achsen (7,8) erfolgt, insbesondere wobei der Strahlengang (10z, 10y) derart modifiziert wird, dass dieser durch eine statische Empfangsblende auf das optoelektronische Empfangselement ausgerichtet wird..

15. Computerprogrammprodukt mit Programmcode, der auf einem maschinenlesbaren Träger gespeichert ist, oder Computer-Daten-Signal, verkörpert durch eine elektromagnetische Welle, zur Durchführung des Verfahrens nach einem der Ansprüche 9 bis 14, wobei der Programmcode eine Ansteuerung eines optischen Elements (30) zur Ziellinienmodifikation in einem Vermessungsgerät (11) nach einem der Ansprüche 1 bis 8 durchführt, insbesondere wobei durch den Programmcode eine Ziellinienmodifikation durch eine Regelung anhand einer Erfassung des ersten Strahlengangs (10z) erfolgt.

## Claims

1. Optical surveying device (11),
in particular a tachymeter, laser scanner, or laser tracker, having
a base (1) for setting up the surveying device (11) and a targeting unit (3), which is rotatable in relation to the base (1) about two axes (7, 8), which are each with provided with angle meters, this targeting unit (3) defining a target axis (9) for targeting a target object (40) to be surveyed, wherein the targeting unit (3) has
- a first beam path (10z) for emitting optical radiation (10), in particular from a laser light source, in the direction of the target object (40) to be surveyed, and
- a second beam path (10y) for receiving a component of the optical radiation (10), which is reflected from the target object (40), by way of an optoelectronic receiving element (58, 13, 51), wherein at least one of the beam paths (10z, 10y) has an optical element (30), which is implemented at least having an optically transparent, deformable volume body (63), in particular a liquid, which has at least one interface (63g) toward a medium having an optical index of refraction deviating from the volume body (63),
**characterized in that** the interface (63g) is deformable by means of multiple electrical activation signals (31a, 31b, 31c, 31d) in such a manner that thus the optical refraction properties of the element are differently variable in at least two non-coincident directions (31a, 31b, 31c, 31d), in particular wherein the directions (31a, 31b, 31c, 31d) are at least approximately orthogonal to an optical axis of the optical element (30), in particular wherein the optical element (30) is a liquid lens.

2. Surveying device (11) according to Claim 1, **characterized in that** the optical element (30) has multiple final control elements, which are activated by the electrical activation signals (31a, 31b, 31c, 31d) in particular at least four, preferably eight or more, along the circumference of the volume body (63).

3. Surveying device (11) according to Claim 1 or 2, **characterized in that** the optical element (30) is implemented in such a manner that its optical refraction properties are variable in such a manner that a variation of a deflection of the optical axis of the relevant beam path can be carried out by the electrical activation signals (31a, 31b, 31c, 31d), in particular wherein the optical signal can be switched over between a reference path and a measuring path using the variation of the deflection.

4. Surveying device (11) according to any one of Claims 1 to 3, **characterized in that** the optical element (30) is implemented in such a manner that its optical refraction properties are variable in such a manner that a variation of an axial focusing of the relevant beam path can be carried out by the electrical activation signals (31a, 31b, 31c, 31d),
in particular wherein the focusing is variable between divergent and convergent.

5. Surveying device (11) according to any one of Claims 1 to 4, **characterized in that** the surveying device (11) has an optoelectronic distance meter and the beam path (10z, 10y) having the optical element (30) guides optical radiation of the distance meter, and/or
the surveying device (11) has automatic target detection and the beam path (10z, 10y) having the optical element (30) guides optical radiation of the target detection.

6. Surveying device (11) according to any one of Claims 1 to 5, **characterized in that** the optical element (30) is arranged in the first beam path (10z) and a static and/or dynamic target line modification can be carried out with the variation of the optical refraction properties, in particular wherein the target axis (9) can be calibrated in its alignment using the static target line modification.

7. Surveying device (11) according to any one of Claims 1 to 6, **characterized in that** the surveying device (11) has an optical sensor element (51, 53) for a recognition of a point of incidence of the optical radiation (10) on the target object (40) and
a regulation of the activation signals (31a, 31b, 31c, 31d) is performed by an analysis of the sensor element (51, 53) in such a manner that a shape and/or a location of the point of incidence in relation to the target axis (9) corresponds to a setpoint value.

8. Surveying device (11) according to any one of Claims 1 to 7, **characterized in that** the optical element (30) is implemented and arranged in such a manner that in using it a target line modification in the form of
- aligning a target line in relation to the target axis (9) of the surveying device (11),
- varying a divergence of the emitted radiation, in particular direction-dependent variation,
- reducing speckle effects by dynamic variation of the refraction properties,
- smoothing a modulation wavefront,
- executing dynamic scanning movements of the first beam path (10z),
- switching over between a reference beam path and a measuring beam path,
- aligning at least beam paths of two different optical radiation sources in relation to one another, and/or
- tracking the target object (40) using the first and/or second beam path
can be carried out.

9. Method for surveying a target object (40) using an optical surveying device (11), in particular a tachymeter, laser scanner, or laser tracker, having
- setting up a base (1) of the device (11),
- targeting the target object (40) using a target axis (9) of a targeting unit (3) by rotating the targeting unit (3) about two axes (7, 8), which are provided with angle meters, in relation to the base (1),
wherein the targeting is performed using
- emitting of optical radiation (10) along a first beam path (10z) in the direction of the target object (40), and
- receiving a fraction of the optical radiation (10), which is reflected from the target object (40) along a second beam path (10y), by way of an optoelectronic receiving element,
**characterized by** a modification of the first and/or second beam path using a variation of optical refraction properties of an optical element (30), which is located in at least one of the beam paths (10z, 10y), in at least two non-coincident directions (31a, 31b, 31c, 31d),
which is performed by different deformation of an interface (63g) of an optically transparent deformable volume body (63), in particular a liquid, toward a medium having an optical index of refraction deviating from the volume body (63), in the directions (31a, 31b, 31c, 31d), and is controlled by means of multiple electrical activation signals (31a, 31b, 31c, 31d).

10. Method according to Claim 9, **characterized in that** the modification is performed as a static target line modification in the form of beam bundle shaping of different divergence angles of the emitted optical radiation.

11. Method according to any one of Claims 9 and 10, **characterized in that** the emission of the optical radiation (10) is performed using at least two wavelengths, in particular one visible wavelength and one nonvisible wavelength, especially using a laser light source, with which the two wavelengths can be emitted by a single component, and the modification as a static target line modification aligns the optical radiation (10) of the first and/or second wavelength in relation to the target axis (9).

12. Method according to any one of Claims 9 to 11, **characterized in that** the modification is performed as a static target line modification in such a manner that a distance-adapted focusing of the beam path (10z, 10y) containing the optical element (30) is performed, in particular having a first beam divergence for a noncooperative target object (40), which is less than a second beam divergence for a cooperative target object (40).

13. Method according to any one of Claims 9 to 12, **characterized in that** the modification is performed as a static target line modification in such a manner that an adaptation of the focusing of the beam path (10z, 10y) containing the optical element (30) is performed, so that an irradiance of the optoelectronic receiving element is kept at least approximately constant.

14. Method according to any one of Claims 9 to 13, **characterized in that** the modification is performed as a dynamic target line modification with dynamic variation of the refraction properties, such that a reduction of speckle effects of the optical radiation, and/or smoothing of a modulation wavefront of the optical radiation is effected, in particular having a periodic variation of the refraction properties and/or, **in that** the modification is performed as a dynamic target line modification having a scanning movement of the beam path (10z, 10y) in a region about a setpoint target direction to the target object (40),
in particular having a determination of an edge of the target object (40) or an inclination of a surface of the target object (40) in relation to the setpoint target direction by surveying multiple points within the scanning movement, or the modification is performed as a dynamic target line modification synchronously to a movement of at least one of the axes (7, 8), in particular wherein the beam path (10z, 10y) is modified in such a manner that this is aligned by a static receiving aperture on the optoelectronic receiving element.

15. Computer program product having program code which is stored on a machine-readable carrier, or a computer data signal, embodied by an electromagnetic wave, for carrying out the method according to any one of Claims 9 to 14, wherein the program code carries out an activation of an optical element (30) for the target line modification in a surveying device (11) according to any one of Claims 1 to 8, in particular wherein via the program code a target line modification is performed by a regulation with reference to a recognition of the first beam path (10z).

## Revendications

1. Appareil de mesure (11) optique, notamment tachéomètre, scanneur laser ou appareil de suivi laser, comprenant
une base (1) pour l'installation de l'appareil de mesure (11), et
une unité de visée (3) pouvant tourner par rapport à la base (1) autour de deux axes (7, 8) dotés chacun de rapporteurs d'angle, laquelle unité de visée (3) définit un axe de visée (9) pour viser un objet cible (40) à mesurer,
dans lequel l'unité de visée (3) présente
• un premier chemin optique (10z) pour l'émission d'un rayonnement optique (10), notamment issu d'une source laser, en direction de l'objet cible (40) à mesurer, et
• un second chemin optique (10y) pour la réception, par un élément optoélectronique récepteur (58, 13, 51), d'une partie du rayonnement optique (10) réfléchie par l'objet cible (40),
et dans lequel
au moins un des chemins optiques (10z, 10y) présente un élément optique (30) possédant au moins un corps volumique (63), notamment un fluide, déformable et transparent à la lumière, lequel corps volumique possède au moins une surface limite (63g) vers un milieu présentant un indice de réfraction optique différent de celui du corps volumique (63),
**caractérisé en ce que**
la surface limite (63g) est déformable au moyen de plusieurs signaux électriques de commande (31 a, 31 b, 31 c, 31 d) de manière à permettre aux propriétés de réfraction optique de l'élément de varier de manière différente dans au moins deux directions non coïncidentes (31 a, 31 b, 31 c, 31 d), notamment des directions (31 a, 31 b, 31 c, 31 d) au moins approximativement orthogonales à un axe optique de l'élément optique (30), l'élément optique (30) étant notamment une lentille liquide.

2. Appareil de mesure (11) selon la revendication 1, **caractérisé en ce que** l'élément optique (30) présente, à la périphérie du corps volumique (63), plusieurs actionneurs, notamment au moins quatre, de préférence au moins huit, commandés par les signaux électriques de commande (31a, 31b, 31c, 31d).

3. Appareil de mesure (11) selon la revendication 1 ou 2, **caractérisé en ce que** l'élément optique (30) est tel que ses propriétés de réfraction optique peuvent varier de manière à permettre, moyennant les signaux électriques de commande (31a, 31b, 31c, 31d), une modification de la déviation de l'axe optique du chemin optique concerné,
la modification de la déviation permettant notamment la commutation du signal optique entre un chemin de référence et un chemin de mesure.

4. Appareil de mesure (11) selon l'une des revendications 1 à 3, **caractérisé en ce que**
l'élément optique (30) est tel que ses propriétés de réfraction optique peuvent varier de manière à permettre, moyennant les signaux électriques de commande (31a, 31b, 31c, 31 d), une modification de la focalisation axiale du chemin optique concerné,
la focalisation pouvant notamment passer de divergente à convergente et vice versa.

5. Appareil de mesure (11) selon l'une des revendications 1 à 4, **caractérisé en ce que**
l'appareil de mesure (11) présente un distancemètre optoélectronique et le chemin optique (10z, 10y) présentant l'élément optique (30) guide un rayonnement optique du distancemètre, et/ou
**en ce que** l'appareil de mesure (11) dispose d'une détection automatique de cible et le chemin optique (10z, 10y) présentant l'élément optique (30) guide un rayonnement optique de la détection de cible.

6. Appareil de mesure (11) selon l'une des revendications 1 à 5, **caractérisé en ce que**
l'élément optique (30) est placé dans le premier chemin optique (10z) et une variation des propriétés de réfraction optique permet une modification statique et/ou dynamique de la ligne de visée, la modification statique de la ligne de visée permettant notamment l'étalonnage de l'axe de visée (9) dans son alignement.

7. Appareil de mesure (11) selon l'une des revendications 1 à 6, **caractérisé en ce que**
l'appareil de mesure (11) possède un élément capteur (51, 53) optique destiné à détecter un point d'incidence du rayonnement optique (10) sur l'objet cible (40), et
une évaluation de l'élément capteur (51, 53) entraîne une régulation des signaux de commande (31 a, 31 b, 31 c, 31 d) telle qu'une forme et/ou une position du point d'incidence par rapport à l'axe de visée (9) prennent une valeur théorique.

8. Appareil de mesure (11) selon l'une des revendications 1 à 7, **caractérisé en ce que**
l'élément optique (30) est conçu et disposé de manière à pouvoir modifier la ligne de visée comme suit :
• orientation d'une ligne de visée par rapport à l'axe de visée (9) de l'appareil de mesure (11),
• modification d'une divergence du rayonnement émis, notamment une modification dépendant de la direction,
• réduction des effets de chatoiement par une variation dynamique des propriétés de réfraction,
• lissage d'un front d'onde de modulation,
• exécution de mouvements dynamiques de balayage du premier chemin optique (10z),
• commutation entre un chemin optique de référence et un chemin optique de mesure,
• orientation l'un par rapport à l'autre d'au moins certains chemins optiques issus de deux sources de rayonnement distinctes, et/ou
• suivi de l'objet cible (40) avec le premier et/ou le second chemin optique.

9. Procédé de mesure d'un objet cible (40) au moyen d'un appareil de mesure (11) optique, notamment d'un tachéomètre, scanneur laser ou appareil de suivi laser, comprenant
• l'installation d'une base (1) de l'appareil (11),
• une visée de l'objet cible (40) avec un axe de visée (9) d'une unité de visée (3) moyennant une rotation, par rapport à la base (1), de l'unité de visée (3) autour de deux axes (7, 8) dotés de rapporteurs d'angle,
ladite visée comprenant
• l'émission d'un rayonnement optique (10) le long d'un premier chemin optique (10z) en direction de l'objet cible (40), et
• la réception, par un élément optoélectronique récepteur, d'une partie du rayonnement optique (10) réfléchie par l'objet cible (40) le long d'un second chemin optique (10y),
**caractérisé par**
une modification du premier et/ou du second chemin optique moyennant une variation des propriétés de réfraction optique, dans au moins deux directions non coïncidentes (31 a, 31 b, 31 c, 31 d), d'un élément optique (30) se trouvant sur au moins un des chemins optiques (10z, 10y), ladite variation étant causée par une déformation différente d'une surface limite (63g) d'un corps volumique (63), notamment un fluide, déformable et transparent à la lumière, vers un milieu présentant un indice de réfraction optique différent de celui du corps volumique (63) dans les directions (31a, 31b, 31c, 31 d), et
commandée par plusieurs signaux électriques de commande (31 a, 31b, 31c, 31d).

10. Procédé selon la revendication 9, **caractérisé en ce que**
la modification est une modification statique de la ligne de visée sous forme d'une formation de faisceau de rayonnements présentant différents angles de divergence du rayonnement optique émis.

11. Procédé selon l'une des revendications 9 ou 10, **caractérisé en ce que**
le rayonnement optique (10) est émis avec au moins deux longueurs d'onde, notamment une visible et une invisible, spécialement par une source laser dont un même composant peut émettre les deux longueurs d'onde, et
la modification en tant que modification statique de la ligne de visée aligne le rayonnement optique (10) de la première et/ou de la deuxième longueur d'onde par rapport à l'axe de visée (9).

12. Procédé selon l'une des revendications 9 à 11, **caractérisé en ce que**
la modification en tant que modification statique de la ligne de visée est effectuée de manière qu'une focalisation du chemin optique (10z, 10y) contenant l'élément optique (30) est adaptée en fonction de la distance,
notamment avec une première divergence de faisceau pour un objet cible (40) non coopératif qui est inférieure à une seconde divergence de faisceau pour un objet cible (40) coopératif.

13. Procédé selon l'une des revendications 9 à 12, **caractérisé en ce que**
la modification en tant que modification statique de la ligne de visée est effectuée de manière qu'une focalisation du chemin optique (10z, 10y) contenant l'élément optique est adaptée de sorte que l'éclairement énergétique de l'élément optoélectronique récepteur est maintenu au moins approximativement constant.

14. Procédé selon l'une des revendications 9 à 13, **caractérisé en ce que**
la modification en tant que modification dynamique de la ligne de visée est effectuée avec une variation dynamique des propriétés de réfraction, telle qu' une réduction des effets de chatoiement du rayonnement optique et/ou un lissage du front d'onde de modulation du rayonnement optique est effectuée, notamment avec une variation périodique des propriétés de réfraction, et/ou **en ce que** la modification en tant que modification dynamique de la ligne de visée est effectuée avec un mouvement de balayage du chemin optique (10z, 10y) aux alentours d'une direction de visée théorique vers l'objet cible (40), notamment avec la détermination d'une arête de l'objet cible (40) ou de l'inclinaison d'une face de l'objet cible (40) par rapport à la direction de visée théorique, moyennant la mesure de plusieurs points dans le mouvement de balayage, ou
la modification en tant que modification dynamique de la ligne de visée est synchrone avec un mouvement d'au moins un des axes (7, 8), le chemin optique (10z, 10y) étant notamment modifié de manière à être aligné sur l'élément optoélectronique récepteur par un diaphragme récepteur statique.

15. Produit logiciel, comportant un code logiciel enregistré sur un support lisible par une machine, ou bien signal de données informatiques, matérialisé par une onde électromagnétique, pour l'exécution du procédé selon l'une des revendications 9 à 14, le code logiciel commandant un élément optique (30) afin de modifier la ligne de visée d'un appareil de mesure (11) selon l'une des revendications 1 à 8, le code logiciel modifiant notamment la ligne de visée au moyen d'une régulation fondée sur une détermination du premier chemin optique (10z).
